(19) Europäisches Patentamt
European Patent Office
Office européen des brevets

(11) **EP 2 436 432 A1**

(12) **EUROPÄISCHE PATENTANMELDUNG**

(43) Veröffentlichungstag:
**04.04.2012 Patentblatt 2012/14**

(51) Int Cl.:
**B01D 45/08** (2006.01)

(21) Anmeldenummer: **10183937.1**

(22) Anmeldetag: **30.09.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **Sulzer Chemtech AG**
**8404 Winterthur (CH)**

(72) Erfinder: **Gäbler, Ansor**
**78464, Konstanz (DE)**

(74) Vertreter: **Sulzer Management AG**
**Patentabteilung / 0067**
**Zürcherstrasse 14**
**8401 Winterthur (CH)**

(54) **Tropfenabscheider**

(57)    Ein Tropfenabscheider (10) umfasst einen Strömungskanal (5), durch welchen ein tröpfchenbeladenes Gas hindurch leitbar ist und entlang einer Hauptströmungsrichtung (6) von diesem tröpfchenbeladenen Gas durchströmbar ist, wobei ein Abscheideelement (8) im wesentlichen ringförmig um den Strömungskanal (5) angeordnet ist, welches von einer vom Strömungskanal (5) weggerichteten Ringströmung durchströmbar ist, wobei das Abscheideelement (8) ein Bodenelement (11) und ein Deckenelement (12) sowie ein Verbindungselement (1, 30, 40, 100, 110, 120, 130, 140, 150) umfasst, welches zwischen dem Bodenelement (11) und dem Deckenelement (12) derart angeordnet ist, dass das Bodenelement (11 ) und das Deckenelement (12) in einem Abstand zueinander angeordnet sind, welcher durch das Verbindungselement (1, 30, 40, 100, 110, 120, 130, 140, 150) festgelegt ist. Das Verbindungselement (1, 30, 40, 100, 110, 120, 130, 140, 150) umfasst eine Abscheideoberfläche (33, 43), entlang derer Tröpfchen des tröpfchenbeladenen Gases in Richtung des Bodenelements (11) als Film leitbar sind, welche eine mittlere Länge von mehr als 1 mm aufweist.

Fig.1a

EP 2 436 432 A1

**Fig.1b**

**Beschreibung**

Die Erfindung betrifft einen Tropfenabscheider zur Abscheidung von Tröpfchen aus einem tröpfchenbeladenen Gas.

Ein Tropfenabscheider gemäss EP 1 930 059 A1 umfasst einen Strömungskanal, durch welchen ein tröpfchenbeladenes Gas hindurch leitbar ist und entlang einer Hauptströmungsrichtung von diesem tröpfchenbeladenen Gas durchströmbar ist. Ein Abscheideelement ist im wesentlichen ringförmig um den Strömungskanal angeordnet und hat eine innere Mantelfläche, die im wesentlichen den Durchmesser des Strömungskanals aufweist, und Öffnungen für den Eintritt des tröpfchenbeladenen Gases in das Abscheideelement. Das Abscheideelement erstreckt sich zumindest über einen Teil der Länge des Strömungskanals. Es umfasst eine gitterartige Struktur. Ein wirbelerzeugender Apparateteil ist mit einer Leitfläche im Strömungskanal angeordnet, mittels welchem das tröpfchenbeladene Gas in eine Rotationsbewegung gebracht und Tröpfchen durch Zentrifugalkraft in Richtung des Abscheideelements geleitet werden. Durch die Leitfläche ist zumindest ein Teil des tröpfchenbeladenen Gases von der Hauptströmungsrichtung in Richtung der Öffnungen umlenkbar.

Aufgabe der Erfindung ist es, einen Tropfenabscheider zu schaffen, mittels welchem eine verbesserte Abscheidung insbesondere kleiner Tröpfchen erzielbar ist.

Der Tropfenabscheider umfasst einen Strömungskanal, durch welchen ein tröpfchenbeladenes Gas hindurch leitbar ist und entlang einer Hauptströmungsrichtung von diesem tröpfchenbeladenen Gas durchströmbar ist. Ein Abscheideelement ist im wesentlichen ringförmig um den Strömungskanal angeordnet, welches von einer vom Strömungskanal weggerichteten Ringströmung durchströmbar ist wobei das Abscheideelement ein Bodenelement und ein Deckenelement sowie ein Verbindungselement umfasst, welches zwischen dem Bodenelement und dem Deckenelement derart angeordnet ist, dass das Bodenelement und das Deckenelement in einem Abstand zueinander angeordnet sind, welcher durch das Verbindungselement festgelegt ist. Das Verbindungselement umfasst eine Abscheideoberfläche, entlang derer Tröpfchen des tröpfchenbeladenen Gases in Richtung des Bodenelements als Film leitbar sind, welche eine mittlere Länge von mehr als 1 mm aufweist. Das Verbindungselement kann zwischen Bodenelement und Deckenelement eingepasst sein. Alternativ dazu ist es möglich, dass ein Verbindungselement durch ein Bodenelement oder Deckenelement hindurch reicht, das heisst, dass ein Verbindungselement eine Mehrzahl von Bodenelementen oder Deckenelementen erfasst. Das Verbindungselement enthält in diesem Fall zumindest ein Auflageelement, sodass das Bodenelement und das Deckenelement in einem Abstand zueinander festgelegt sind, welcher durch das Verbindungselement festgelegt ist.

Insbesondere weisen die Verbindungselemente einen Lückengrad im Bereich von 20 bis 80 % auf.

Die mittlere Länge des Verbindungselements erstreckt sich vorzugsweise im wesentlichen von einer Mantelfläche, die den äusseren Radius des Strömungskanals aufweist, zu einer Mantelfläche, die den äusseren Radius des Boden- oder Deckenelements aufweist. Die Länge ist eine in einer zum Deckenelement oder Bodenelement parallele Verbindungslinie zwischen der Innenkante und der Aussenkante des Verbindungselements. Wenn diese Länge in äquidistanten Parallelebenen zu den durch das Bodenelement oder Deckenelement verlaufenden Ebenen sich verändert, wird eine mittlere Länge definiert. Hierzu wird die Länge in jeder der Parallelebenen als Schnittlinie der Abscheideoberfläche mit der Parallelebene gemessen und der arithmetische Mittelwert dieser Längen bestimmt. Dieser arithmetische Mittelwert ist als mittlere Länge definiert.

Die Anzahl der Parallelebenen ist abhängig von der zu erwartenden Variation der Länge. Die Parallelebenen sind über die gesamte Höhe des Verbindungselements in gleichmässigen Abständen zwischen Bodenelement und Deckenelement angebracht. Wenn die Längenmessungen in 10 Parallelebenen eine Standardabweichung von unter 5% ergibt, ist die gewählte Anzahl der Parallelebenen ausreichend, bei einer Standardabweichung bis zu 25% können 11 bis zu 20 Parallelebenen vorgesehen werden, bei einer Standardabweichung von bis zu 50 % können 15 bis zu 30 Parallelebenen vorgesehen werden.

Nach einem bevorzugten Ausführungsbeispiel kann sich ein ringförmiges Vorabscheideelement vom äusseren Radius des Strömungskanals bis zu einem Aussenradius des Vorabscheideelements erstrecken, wobei der Aussenradius des Vorabscheideelements kleiner als der äussere Radius des Boden- oder Deckenelements ist.

Das Verbindungselement weist insbesondere eine Abscheideoberfläche auf, die im wesentlichen von der mittleren Länge und einer Höhe des Verbindungselements gebildet ist. Die Höhe entspricht vorzugsweise maximal dem Normalabstand zwischen Bodenelement und Deckenelement. Ein erstes Verbindungselement und ein zweites Verbindungselement sind zwischen dem Bodenelement und dem Deckenelement derart angeordnet, dass der Strömungsquerschnitt zwischen den ersten und zweiten zueinander benachbarten Verbindungselementen über deren Länge derart ausgebildet ist, dass die Strömungsgeschwindigkeit des tröpfchenbeladenen Gases auf dem Weg durch den vom ersten und zweiten Verbindungselement sowie vom Bodenelement und Deckenelement begrenzten Radialkanal im wesentlichen konstant ist.

Dies kann dadurch erreicht werden, dass die mittlere Breite des Verbindungselements in Richtung der Ringströmung zunimmt. Das heisst, die mittlere Breite nimmt von der äusseren Mantelfläche des Strömungskanals, welche die Eintrittsfläche in das Abscheideelement ausbildet bis zur äusseren Mantelfläche des Abscheideelements, auf welcher sich die Austrittsfläche für das tröpfchenfreie Gas befindet zu.

Wenn sich die Verbindungselemente nicht über die gesamte Länge des Abscheideelements erstrecken, kann auch eine grössere Anzahl an Verbindungselementen in der Nähe der Austrittsfläche vorgesehen sein, also in der Nähe der äusseren Mantelfläche des Abscheideelements als in der Nähe der Eintrittsfläche. Der Durchmesser der Eintrittsfläche entspricht im wesentlichen dem Aussendurchmesser des Strömungskanals, der Durchmesser der äusseren Mantelfläche des Abscheideelements entspricht im wesentlichen dem Aussendurchmesser des Bodenelements oder Deckenelements. Daher ist im Bereich der Austrittsfläche mehr Platz für Verbindungselemente als im Bereich der Eintrittsfläche.

Wenn die Verbindungselemente ein wellenartiges Profil aufweisen, wie nachfolgend gezeigt ist, kann das wellenartige Profil derart ausgebildet sein, dass die Amplitude der Wellenform von der Eintrittsfläche zur Austrittsfläche zunehmend ist. Dies gilt auch für wellenartige Profile, die eine zick-zack Anordnung aufweisen, in welchen die Wellenberge und Wellentäler als Spitzen ausgebildet sind.

Ein Verbindungselement kann auch doppelwandig ausgeführt sein. In diesem Fall kann der Abstand zwischen den beiden Wänden der Doppelwand von der Eintrittsfläche zur Austrittsfläche zunehmen. Der hierdurch gebildete Zwischenraum zwischen den Wänden wird nicht vom tröpfchenbeladenen Gas durchströmt. Allenfalls können in den Wänden Öffnungen angebracht sein, durch welche abgeschiedene Flüssigkeit in den Zwischenraum eintreten kann und dort unbehindert vom Gasstrom aus dem Abscheideelement abgeführt werden kann.

Nach einem bevorzugten Ausführungsbeispiel weist die Abscheideoberfläche zumindest einen ebenen oder leicht gekrümmten Abschnitt auf. Unter leicht gekrümmt wird dabei ein Krümmungsradius von grösser als 2 cm verstanden.

Insbesondere kann die Abscheidoberfläche ein wellenartiges Profil aufweisen. Das wellenartige Profil kann zumindest einen Wellenberg und ein Wellental aufweisen, wobei zumindest einer der Wellenberge als Spitze ausgebildet sein kann.

Nach bevorzugten Varianten kann die Abscheideoberfläche zumindest einen Kanal und/oder eine Öffnung zur Ableitung von Flüssigkeit enthalten, sodass die Flüssigkeit in Richtung des Bodenelements leitbar ist, welches eine Abflussöffnung oder einen Abflusskanal enthalten kann. Der Kanal kann insbesondere von einem Umleitungselement gebildet werden, welches sich als Vorsprung von der Abscheideoberfläche erstreckt, sodass Flüssigkeit zwischen dem Vorsprung und der Abscheideoberfläche ableitbar ist. Dieser Vorsprung ist vorzugsweise luvseitig angeordnet, das heisst der Vorsprung ragt in Richtung der Eintrittsfläche in die Strömung. Die am Verbindungselement entlang strömende Wandströmung des tröpfchenbeladenen Gases wird somit von dem Vorsprung erfasst, dort umgelenkt und/oder gebremst, sodass die Tröpfchen sich an den Kanalwänden als Film ablagern und der Film im Kanal in Richtung des Bodenelements geleitet wird und von dort über eine Abflussöffnung oder einen Abflusskanal das Abscheideelement verlässt.

Nach einem alternativen Ausführungsbeispiel kann die Abscheideoberfläche von einem ersten dünnwandigen Plattenelement und einem zweiten dünnwandigen Plattenelement gebildet sein, der Kanal von einer Öffnung in der Abscheideoberfläche gebildet sein, sodass Flüssigkeit zwischen dem ersten dünnwandigen Plattenelement und dem zweiten dünnwandigen Plattenelement ableitbar ist. Insbesondere ist erste dünnwandige Plattenelement mit dem zweiten dünnwandigen Plattenelement über mindestens ein Abstandselement verbunden ist.

Der erfindungsgemässe Tropfenabscheider umfasst insbesondere einen Strömungskanal, durch welchen ein tröpfchenbeladenes Gas hindurch leitbar ist und entlang einer Hauptströmungsrichtung von diesem tröpfchenbeladenen Gas durchströmbar ist, wobei ein Abscheideelement im wesentlichen ringförmig um den Strömungskanal angeordnet ist, wobei das Abscheideelement ein Bodenelement und ein Deckenelement sowie eines oder eine Mehrzahl von Verbindungselementen aufweist, welche zwischen dem Bodenelement und dem Deckenelement derart angeordnet sind, dass das Bodenelement und das Deckenelement in einem Abstand zueinander angeordnet sind, welcher durch die Verbindungselemente festgelegt ist. Das Verbindungselement umfasst ein Wandelement, entlang dessen Tropfen des tröpfchenbeladenen Gases in Richtung des Bodenelements als Film leitbar sind, wobei das Wandelement eine mittlere Breite von mehr als 1 mm aufweist. Um die Filmausbildung zu begünstigen, kann die mittlere Breite mehr als 2 mm betragen. Für Flüssigkeiten, die eine grössere Oberfläche zur Ausbildung eines Films benötigen, kann eine mittlere Breite von mehr als 3 mm vorgesehen sein.

Ein derartiges Verbindungselement kann auch aus einem einzigen zusammenhängenden Profil gebildet sein.

Die Hauptströmungsrichtung ist parallel zur Mittenachse des Strömungskanals ausgerichtet. Wenn die Wandelemente parallel zu dieser Mittenachse angeordnet sind, ist die Hauptströmungsrichtung parallel zu dem Wandelement und verläuft in Richtung von dem Bodenelement zum Deckenelement. Diese Hauptströmungsrichtung entspricht in der Regel nicht den lokal in der Umgebung des Wandelements vorliegenden Strömungsverhältnissen. Insbesondere kann das Bodenelement und das Deckenelement eine Abdeckung ausbilden, sodass das Bodenelement und Deckenelement nicht von dem tröpfchenbeladenen Gas durchströmt werden.

Die Breite des Wandelements wird in einer Normalebene auf die Hauptströmungsrichtung bestimmt. Da die Breite des Wandelements entlang dessen Länge, also der Abmessung zwischen Bodenelement und Deckenelement, veränderlich sein kann, wird in diesem Fall eine mittlere Breite definiert. Diese mittlere Breite ist definiert als der arithmetische Mittelwert aller Breiten, welche das Wandelement über seine Länge annimmt.

In der Folge wird angenommen, dass das tröpfchenbeladene Gas das Wandelement im wesentlichen radial anströmt. Das heisst, die Strömungsrichtung ist in Bezug auf die Hauptströmungsrichtung um einen Winkel von 85° bis 95 , bevorzugt um die 90° versetzt und in bezug auf den Strömungskanal radial nach aussen gerichtet. Diese Strömung soll als Radialströmung bezeichnet werden. Das heisst, die Radialströmung verläuft im wesentlichen sternförmig ausgehend von der Mittenachse des Strömungskanals. Die Strahlen dieser sternförmigen Radialströmung treffen auf die Abscheideoberfläche des Wandelements auf, daher liegt die Abscheideoberfläche des Wandelements auf der Luvseite desselben.

Die Breite des Wandelements ist definiert als die Schnittlinie, welche sich bei einem Schnitt einer Normalebene auf die Hauptströmungsrichtung mit dem Wandelement auf dessen Luvseite ergibt.

Zur Ermittlung einer mittleren Breite werden zumindest 2 solcher Normalebenen pro cm Länge des Wandelements in äquidistantem Abstand zueinander zwischen Bodenelement und Deckenelement vorgesehen. Die Länge der Schnittlinie wird für jede der Normalebenen bestimmt und der arithmetische Mittelwert gebildet. Dieser arithmetische Mittelwert ergibt die mittlere Breite des Wandelements.

Zwischen je zwei benachbarten Wandelementen befindet sich eine Öffnung für das tröpfchenbeladene Gas. Wandelemente sind benachbart, wenn ihre Längsachsen auf einem gemeinsamen Kreis angeordnet sind. Die Längsachse eines Wandelements geht durch die Mittelpunkte der Schnittlinie. Die Summe aller Öffnungen bezogen auf den Kreisumfang ergibt einen Lückengrad, der von 20% bis 80% betragen kann.

Vorteilhafterweise ist die mittlere Breite des Wandelements kleiner als der Innendurchmesser (S) des Strömungskanals.

Die Bodenelemente und Deckenelemente müssen nicht unmittelbar an die Abscheideoberfläche des Verbindungselements anschliessen. Das Verbindungselement umfasst nach einem bevorzugten Ausführungsbeispiel ein Rohrwandelement entlang dessen Tropfen des tröpfchenbeladenen Gases in Richtung der Bodenplatte leitbar sind. Das Rohrwandelement hat einen maximalen Durchmesser (D), der kleiner als der Innendurchmesser (S) des Strömungskanals ist.

Insbesondere weist das Verbindungselement eine Längsachse auf, welche im wesentlichen normal zum Bodenelement und zum Deckenelement ausgerichtet ist. Die Längsachse kann aber auch um einen Winkel zum Boden- und/oder Deckenelement geneigt sein, wobei der Winkel bis zu 60°, vorzugsweise bis zu 45°, besonders bevorzugt bis zu 30° zur Normalen auf das Bodenelement beträgt.

Eine Mehrzahl von Verbindungselementen kann vorgesehen sein, wobei jedes der Verbindungselemente ein Wandelement aufweist, welches die Abscheideoberfläche enthält.

Insbesondere kann das Wandelement als Rohrwandelement ausgebildet sein. Die Rohrwandelemente sind vorteilhafterweise derart zwischen den Bodenelementen und Deckenelementen angeordnet, dass ihre Längsachsen auf einer geschlossenen Kurve liegen, welche um den Strömungskanal herum verläuft. Insbesondere kann die geschlossene Kurve ein Kreis sein.

Eine besonders vorteilhafte Anordnung zur Abscheidung ergibt sich, wenn die Verbindungselemente in Strömungsrichtung in mehreren Reihen hintereinander angeordnet sind. Dies ermöglicht insbesondere die verbesserte Abscheidung eines breiteren Tropfenspektrums. Die Längsachsen der Verbindungselemente bilden somit nach einem besonders bevorzugten Ausführungsbeispiel zumindest einen ersten und einen zweiten Kreis um den Strömungskanal aus, wobei der erste Kreis konzentrisch zum zweiten Kreis angeordnet ist.

Die Längsachsen der Verbindungselemente des ersten Kreises können zumindest teilweise versetzt zu den Längsachsen der Verbindungselemente des zweiten Kreises angeordnet sein. Hierdurch kann die Gasströmung an den Rohrwandelementen abgelenkt werden. Zumindest ein Teil der Tröpfchen kann dieser Ablenkung nicht folgen, sodass sich die Tröpfchen auf der Abscheideoberfläche der Rohrwandelemente anlagern und somit aus dem Gasstrom abgeschieden werden.

Die Längsachsen von je zwei benachbarten Verbindungselementen können in einem Abstand (A) zueinander angeordnet sein, der grösser als der Durchmesser (D) des Rohrwandelements ist.

Nach einem bevorzugten Ausführungsbeispiel liegt der Durchmesser (D) des Rohrwandelements im Bereich von 2 bis 20 mm, bevorzugt 5 bis 15 mm. Wenn das Rohrwandelement nicht zylindrisch ist, soll der Durchmesser als der Durchmesser eines zylindrischen Rohrwandelements mit gleicher Mantelfläche bestimmt sein.

Vorzugsweise bilden die Breite und die Höhe des Verbindungselements eine Abscheideoberfläche aus, die zumindest einen ebenen Abschnitt aufweist.

Insbesondere kann die Abscheideoberfläche zumindest einen Kanal und/oder eine Öffnung zur Ableitung von Flüssigkeit enthalten, sodass die Flüssigkeit abgeschirmt von der Gasströmung den Tropfenabscheider verlassen kann.

Nach einem alternativen Ausführungsbeispiel weist die Abscheideoberfläche zumindest einen gekrümmten Abschnitt auf. Der gekrümmte Abschnitt kann als Rohrwandelement ausgebildet sein. Das Rohrwandelement kann ein erstes Rohrwandelement umfassen, welches einen ersten Durchmesser (D1) aufweist sowie ein zweites Rohrwandelement, welches einen zweiten Durchmesser (D2) aufweist. Der erste Durchmesser (D1) des ersten Rohrwandelements (3) kann sich vom zweiten Durchmesser (D2) des zweiten Rohrwandelements (13) unterscheiden.

Der Durchmesser (D) eines ersten Rohrwandelements kann sich von dem Durchmesser eines zweiten Rohrwandelementes unterscheiden. Hierdurch kann der Grad der Ablenkung der Gasströmung verändert werden, was insbesondere von Vorteil ist, wenn tröpfchenbeladene Gase mit einer breiten Tropfengrössenverteilung eingesetzt werden.

Das Rohrwandelement kann nach einem weiteren Ausführungsbeispiel eine gasdurchlässige Struktur enthalten. Die gasdurchlässige Struktur kann beispielsweise eine Perforierung, eine filzartige Struktur, einen porösen Körper, ein Gewebe oder ein Gestrick umfassen. Die gasdurchlässige Struktur ist aber immer derart ausgebildet, dass ein ungestörtes Abfliessen der abgeschiedenen Flüssigkeit möglich ist. Insbesondere dient die gasdurchlässige Struktur der Bildung und Aufrechterhaltung eines Flüssigkeitsfilms.

Die Abscheideoberfläche des Rohrwandelements ist vorteilhafterweise derart beschaffen, dass eine Benetzung der Abscheideoberfläche mit Flüssigkeit gefördert wird.

Das Verbindungselement kann ein Fusselement und/oder ein Kopfelement enthalten, mittels welchem das Verbindungselement auf dem Bodenelement und/oder der Deckenelement befestigbar ist.

Nach einem besonders vorteilhaften Ausführungsbeispiel ist die Abscheideoberfläche fluidundurchlässig. Insbesondere bildet sich ein Flüssigkeitsfilm auf der Abscheideoberfläche aus, welcher entlang der Abscheideoberfläche in Richtung des Bodenelements fliesst.

Auf dem Bodenelement kann ein Sammelelement für die auf der Abscheideoberfläche abgeschiedene Flüssigkeit vorgesehen sein.

Zur Verbesserung der Abscheidung kleiner Tröpfchen kann der Tropfenabscheider ein Abscheideelement aufweisen, welches ein ringförmiges Vorabscheideelement enthält. Dieses ringförmige Vorabscheideelement enthält eine gitterartige Struktur, die den Strömungskanal als ringförmiges Element umgibt. Die gitterartige Struktur ist für das tröpfchenbeladene Gas durchlässig. Die kleinsten Tröpfchen werden auf der gitterartigen Struktur angelagert und koaleszieren zu grösseren Tropfen. Diese Tropfen werden bereits in der gitterartigen Struktur abgeschieden oder können mit dem Gasstrom wieder mitgerissen werden, um auf der Abscheideoberfläche der stromabwärts angeordneten Verbindungselemente abgeschieden zu werden. Daher gelingt es mit dieser besonders vorteilhaften Ausführungsform, eine fast vollständige Abscheidung von Tröpfchen aus einem Gas mit einer breiten Tropfengrössenverteilung zu erreichen. Das ringförmige Vorabscheideelement kann eine erste und eine zweite Lage umfassen, wobei die erste Lage benachbart zur zweiten Lage angeordnet ist. Eine der ersten oder zweiten Lagen kann eine gewellte Struktur aufweisen, die jeweils andere Lage weist dementsprechend keine gleichartige gewellte Struktur auf.

Vorteilhafterweise weisen die Verbindungselemente eine Abscheideoberfläche auf, die fluidundurchlässig ist. Das heisst, die Abscheideoberfläche soll insbesondere für die abgeschiedene Flüssigkeit undurchlässig sein, sodass sich auf der Abscheideoberfläche ein geschlossener Flüssigkeitsfilm ausbildet. Nach einem besonders bevorzugten Ausführungsbeispiel hat die Abscheideoberfläche keine Durchbrüche oder Perforationen.

Der Tropfenabscheider nach einem der vorhergehenden Ausführungsbeispiele kann auch eine Mehrzahl von übereinander angeordneten Abscheideelementen enthalten. Abscheideelemente nach jedem der Ausführungsbeispiele können miteinander beliebig kombiniert werden.

Nach einem weiteren Ausführungsbeispiel kann das Abscheideelement als einstückiges Bauteil ausgestaltet sein. Dies ermöglicht die Herstellung des Abscheideelements in einem Gussverfahren, insbesondere einem Spritzgussverfahren.

Ein Tropfenabscheider nach einem der vorhergehenden Ausführungsbeispiele kann insbesondere zur Abscheidung von Kondensat aus Erdgas verwendet werden. Dieses Kondensat kann kondensierte Fraktionen aus dem Erdgas, das heisst, insbesondere längerkettige Kohlenwasserstoffe enthalten.

Nachfolgend wird die Erfindung anhand der Zeichnungen erläutert. Es zeigen:

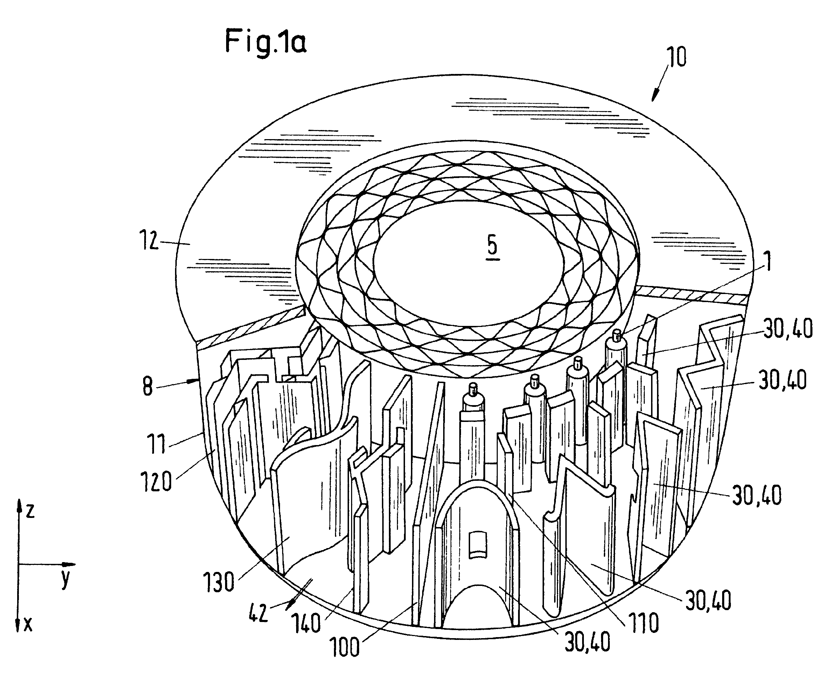

Fig. 1a     ein Tropfenabscheider enthaltend verschiedene Varianten von Verbindungselementen

Fig. 1 b     einen erfindungsgemässen Tropfenabscheider gemäss eines ersten Ausführungsbeispiels,

Fig. 2a     eine Draufsicht auf ein Element einer gitterartigen Struktur nach dem Stand der Technik

Fig. 2b     eine Seitenansicht auf ein Element einer gitterartigen Struktur nach dem Stand der Technik.

Fig. 2c     eine Draufsicht auf ein Verbindungselement gemäss Fig. 1 b

Fig. 2d     eine Seitenansicht auf ein Verbindungselement gemäss Fig. 1 b

Fig. 3      den Aufbau eines Tropfenabscheiders mit Wandelementen gemäss Fig. 2c und Fig. 2d

Fig. 4      den Aufbau eines Tropfenabscheiders nach einem zweiten Ausführungsbeispiel

Fig. 5a      ein Detail eines Verbindungselements nach einem der in Fig. 1 b 3 oder 4 dargestellten Ausführungsbeispiele

Fig. 5b      eine Variante eines Verbindungselements

Fig. 6      einen Vergleich der Güte der Abscheidung eines Tropfenabscheiders in einer vorbekannten Ausführung mit erfindungsgemässen Tropfenabscheidern gemäss Fig. 1 b

Fig. 7a      der Aufbau eines Tropfenabscheiders nach einem dritten Ausführungsbeispiel.

Fig. 7b      eine Aufsicht auf den Tropfenabscheider nach Fig. 7a

Fig. 8      ein Tropfenabscheider enthaltend verschiedene Varianten von Verbindungselementen

Fig. 9a      eine Draufsicht auf eine erste Variante von Verbindungselementen für den Tropfenabscheider nach Fig. 8

Fig. 9b      eine Seitenansicht der ersten Variante von Verbindungselementen für den Tropfenabscheider nach Fig. 8

Fig. 9c      eine Draufsicht auf eine zweite Variante von Verbindungselementen für den Tropfenabscheider nach Fig. 8

Fig. 9d      eine Seitenansicht der zweiten Variante von Verbindungselementen für den Tropfenabscheider nach Fig. 8

Fig. 9e      eine Draufsicht auf eine dritte Variante von Verbindungselementen für den Tropfenabscheider nach Fig. 8

Fig. 9f      eine Seitenansicht der dritten Variante von Verbindungselementen für den Tropfenabscheider nach Fig. 8

Fig. 9g      eine Draufsicht auf eine vierte Variante von Verbindungselementen für den Tropfenabscheider nach Fig. 8

Fig. 9h      eine Seitenansicht der vierten Variante von Verbindungselementen für den Tropfenabscheider nach Fig. 8

Fig. 9i      eine Draufsicht auf eine fünfte Variante von Verbindungselementen für den Tropfenabscheider nach Fig. 8

Fig. 9j      eine Seitenansicht der fünften Variante von Verbindungselementen für den Tropfenabscheider nach Fig. 8

Fig. 10      eine Anordnung zur Abscheidung eines tröpfchenbeladenen Gases, welche eine Mehrzahl von Tropfenabscheidern gemäss der Erfindung enthält

Fig. 11      einen Tropfenabscheider nach einem vierten Ausführungsbeispiel der Erfindung

Fig. 12      einen Tropfenabscheider nach einem fünften Ausführungsbeispiel der Erfindung

Fig. 13a      einen Tropfenabscheider nach einem sechsten Ausführungsbeispiel der Erfindung

Fig. 13b      ein Detail eines Verbindungselements gemäss Fig. 13a

Fig. 14a      einen Tropfenabscheider nach einem siebenten Ausführungsbeispiel der Erfindung

Fig. 14b      ein Detail eines Verbindungselements gemäss Fig. 14a

Fig. 15a      einen Tropfenabscheider nach einem achten Ausführungsbeispiel der Erfindung

Fig. 15b      ein Detail eines Verbindungselements gemäss Fig. 15a

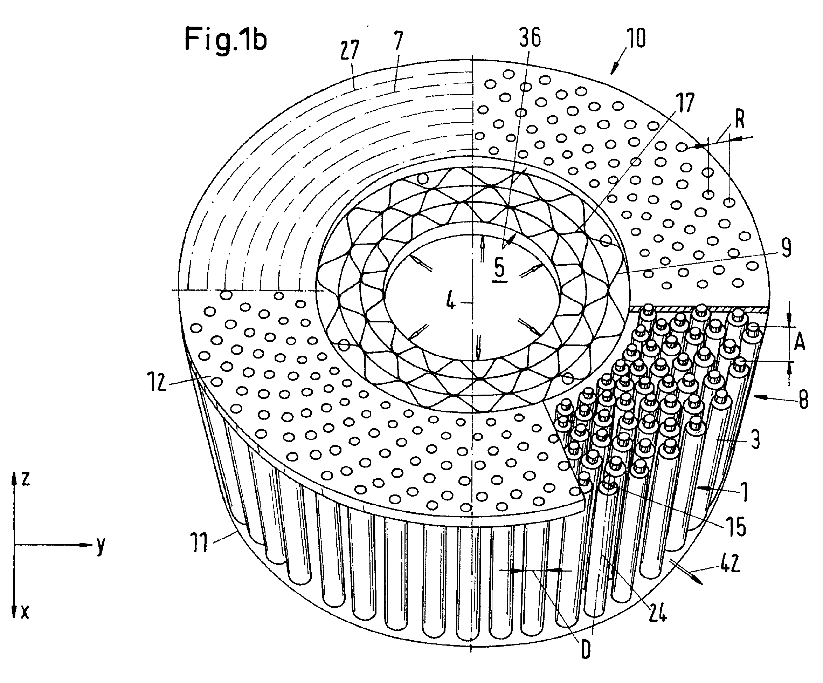

Fig. 1 zeigt einen Tropfenabscheider 10 umfassend einen Strömungskanal 5, durch welchen ein tröpfchenbeladenes Gas entlang einer Hauptströmungsrichtung 6 hindurch geleitet wird. Die

Hauptströmungsrichtung im Strömungskanal 5 kann parallel zur Längsachse 4 des Strömungskanals 5 sein. Die Längsachse 4 des Strömungskanals 5 erstreckt sich in Richtung der z-Achse des in der unteren linken Ecke der Fig. 1 befindlichen Koordinatensystems.

Das Abscheideelement 8 ist im wesentlichen ringförmig um den Strömungskanal 5 angeordnet. Das Abscheideelement 8 weist ein Bodenelement, hier als eine Bodenplatte 11 ausgestaltet, und ein Deckenelement, hier als eine Deckplatte 12 ausgestaltet, sowie eine Mehrzahl von Verbindungselementen 1 auf, welche zwischen der Bodenplatte 11 und der Deckplatte 12 angeordnet sind. Die Bodenplatte 11 und die Deckplatte 12 sind in einem Abstand zueinander angeordnet, welcher durch die Verbindungselemente 1 festgelegt ist.

Die Bodenplatte 11 und/oder die Deckplatte 12 weisen eine Öffnung auf, die dem Durchmesser des Strömungskanals 5 entspricht. In Fig. 1 ist nur die Öffnung 36 in der Deckplatte 12 sichtbar. Wenn an einer der Boden- oder Deckplatten keine Öffnung vorgesehen ist, wird das axial durch den Strömungskanal 5 zugeführte tröpfchenbeladene Gas radial in Richtung des Abscheideelements 8 umgelenkt. Die Radialströmung durch das Abscheideelement erfolgt somit radial vom Strömungskanal 5 in Richtung der äusseren Mantelfläche, die zwischen den Aussenkanten der Bodenplatte 11 und der Deckplatte 12 aufgespannt ist.

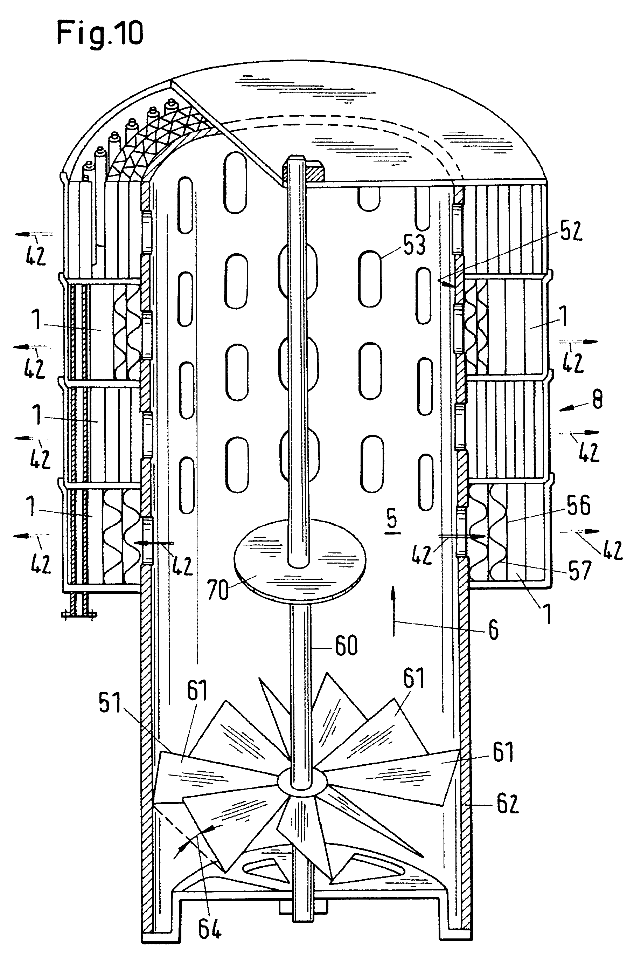

Ein wirbelerzeugender Apparateteil, wie in EP 1 930 059 A1 beschrieben, kann vorgesehen sein, mittels welchem das tröpfchenbeladene Gas in Richtung eines Abscheideelements 8 geleitet wird. Dies ist an einem Ausführungsbeispiel in Fig. 10 gezeigt. Mittels des wirbelerzeugenden Apparateteils wird der Strömung des tröpfchenbeladenen Gases eine Richtungsänderung aufgezwungen, sodass der Strömung bereits eine Radialkomponente der Geschwindigkeit aufgeprägt wird. Durch diese Radialkomponente wird das tröpfchenbeladene Gas in Richtung des Abscheideelements 8 umgeleitet und tritt dann in im wesentlichen radialer Richtung aus dem Abscheideelement 8 aus. Der wirbelerzeugende Apparateteil kann vorteilhafterweise zur Vorabscheidung eingesetzt werden, das heisst, ein Teil der Tröpfchen wird bereits abgeschieden, bevor er in den Strömungskanal 5 eintritt.

Fig. 1 zeigt weiterhin ein ringförmiges Vorabscheideelement 17, welches zwischen dem Strömungskanal 5 und den Verbindungselementen 1 angeordnet ist. Das ringförmige Vorabscheideelement 17 ist hier gemäss EP 1 930 059 A1 ausgestaltet und wird in der Folge noch genauer beschrieben.

Das Verbindungselement 1 hat eine Längsachse 24, die im wesentlichen normal zur Bodenplatte 11 und zur Deckplatte 12 ausgerichtet ist. Das Verbindungselement 1 ist in der Bodenplatte 11 mittels eines nicht sichtbaren Fusselements gehalten und ist in der Deckplatte 12 mittels eines Kopfelements 15 gehalten. Als Halteverbindung kann beispielsweise eine Schnappverbindung oder eine Schraubverbindung vorgesehen sein.

Der Aussendurchmesser eines Abscheideelements 8 liegt zumeist unter 400 mm. Der Durchmesser (D) des Rohrwandelements beträgt vorzugsweise 2 bis 20 mm, insbesondere 5 bis 15 mm. Die Durchmesser von Rohrwandelementen, welche auf derselben Bodenplatte angebracht sind, können variieren. Die Verbindungselemente 2 sind vorzugsweise derart angeordnet, dass ihre Längsachsen 24 auf einem Kreis liegen, dessen Mittelpunkt auf der Längsachse 4 liegt. Die Längsachsen 24 von in einem Kreis benachbarter Verbindungselemente weisen einen Abstand A voneinander auf. Die Summe der Abstände (A) entlang eines derartigen Kreises ist grösser als die Summe der Durchmesser der Verbindungselemente, sodass eine Lücke zwischen den Rohrwandelementen 3 bestehen bleibt, durch welche das tröpfchenbeladene Gas strömen kann.

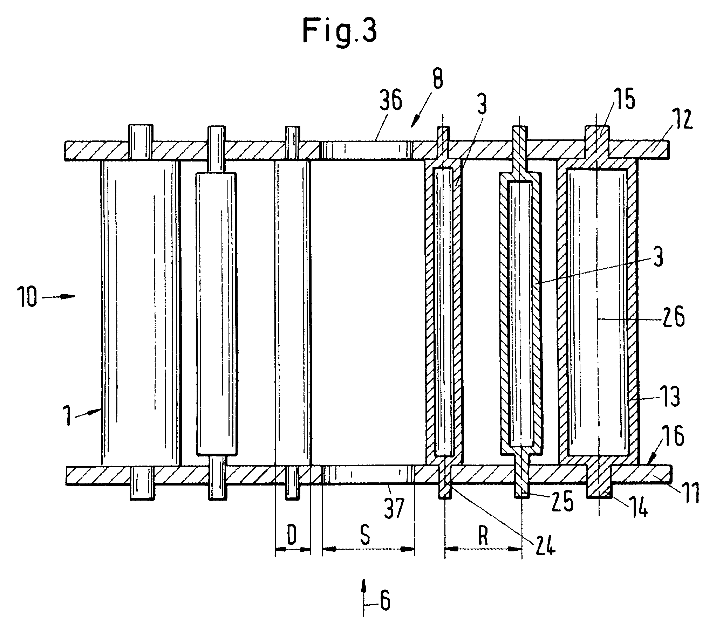

Die Radialabstände von benachbarten Reihen sind ebenfalls derart gewählt, dass der Radialabstände (R) zwischen zwei benachbarten Kreisen grösser als die Summe der Radien von zwei auf diesen benachbarten Kreisen liegender Verbindungselemente ist. Auch die Radialabstände (R) von benachbarten Reihen an Verbindungselementen 1 können unterschiedlich sein, was in Fig. 3 gezeigt ist. Wenn der Durchmesser des Verbindungselement veränderlich ist, ist der mittlere Durchmesser zu verwenden.

Des weiteren kann, wie in Fig. 1 dargestellt ist, das Abscheideelement 8 auch ein ringförmiges Vorabscheideelement 17 enthalten. Dieses ringförmige Vorabscheideelement 17 kann insbesondere jede der Formen annehmen, welche in der EP 1 930 059 A1 beschrieben worden sind. Das ringförmige Vorabscheideelement 17 ist im wesentlichen ringförmig um den Strömungskanal 5 angeordnet und weist eine innere Mantelfläche auf, die im wesentlichen den Durchmesser des Strömungskanals 5 aufweist, und Durchtrittsöffnungen für den Eintritt des tröpfchenbeladenen Gases in das ringförmige Vorabscheideelement, die zeichnerisch nicht dargestellt sind.

Das ringförmige Vorabscheideelement 17 erstreckt sich zumindest über einen Teil der Länge des Strömungskanals 5. Es umfasst eine gitterartige Struktur 9. Die Durchtrittsöffnungen können die Zwischenräume zwischen den Gitterelementen der gitterartigen Struktur sein.

Diese gitterartige Struktur 9 kann beispielsweise durch ein Drahtgeflecht gebildet werden. Alternativ dazu kann ein Gestrick oder Gewebe zum Einsatz kommen. Die gitterartige Struktur kann auch filzartig ausgebildet sein, das heisst aus regellos zueinander angeordneten Strukturelementen, beispielsweise Drähten oder Fäden ausgebildet sein. Die gitterartige Struktur ist in einer oder einer Mehrzahl von Lagen angeordnet. Jede dieser Lagen bildet ein ringförmiges Element aus, das den Strömungskanal umgibt.

Ein derartiges ringförmiges Element hat vorzugsweise mindestens dieselbe Höhe wie die Abscheideoberfläche eines Rohrwandelements.

Alternativ oder in Ergänzung zu der gitterartigen Struktur 9 können Schüttfüllkörper verwendet werden, beispielsweise Dixonringe oder Wendelringe.

Die Lage, welche durch das ringförmige Element ausgebildet ist, kann eine Wellung aufweisen. Durch die Wellung können benachbarte Lagen in einem Abstand zueinander angeordnet werden. Insbesondere können benachbarte Lagen gewellt und ungewellt sein. Unter einer Wellung soll eine Struktur verstanden werden, welche eine wellenförmige, zick-zackförmige oder eine mit Wölbungen oder Einbuchtungen versehene Oberfläche aufweisen kann. Die Wellungen können derart angeordnet sein, dass die Scheitel der Wellenberge parallel zur Längsachse 4 ausgerichtet sind. Es ist auch möglich, dass die Scheitel der Wellenberge einen Winkel mit der Längsachse einschliessen, der bis zu 70°, vorzugsweise bis zu 60 ° besonders bevorzugt bis zu 45° sein kann.

Der Strömungskanal 5 kann sowohl eine Öffnung 36 in dem Bodenelement und dem Deckenelement aufweisen. Eine dieser Öffnungen kann auch im Betriebszustand verschlossen sein, sodass die Strömung umgelenkt wird, und zwar von axialer Richtung, das heisst in Richtung der Längsachse 4 in Richtung der Rohrwandelemente 3 also in radiale Richtung.

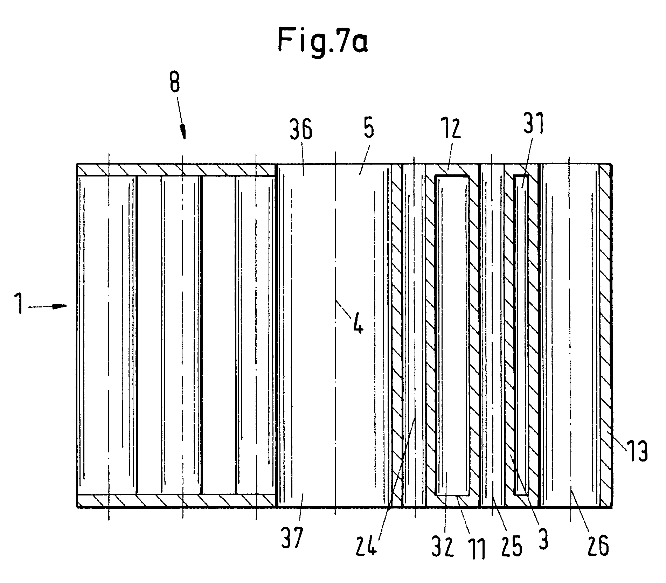

Mehrere Abscheideelemente 8 können übereinander angeordnet sein, beispielsweise können mehrere Abscheideelemente einen Stapel bilden, wie es ebenfalls in der EP 1 930 059 A1 beschrieben worden ist und in Fig. 10 gezeigt ist. Wenn der Tropfenabscheider aus mehreren übereinander angeordneten Abscheideelementen 8 besteht, sind mit Ausnahme des am weitesten stromabwärts gelegenen Abscheideelements sowohl die Öffnung 37 (siehe Fig. 3, Fig. 7a) im Bodenelement 11, als auch die Öffnung 36 im Deckenelement 12 vorhanden.

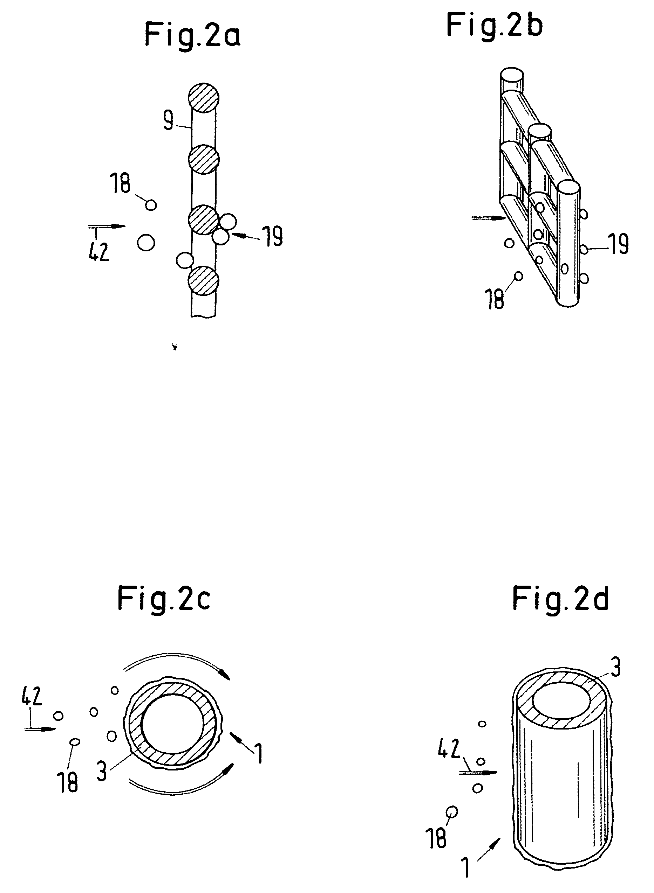

Fig. 2a und Fig. 2b zeigen die Abscheidung entlang eines Elements einer gitterartigen Struktur 9, wie sie auch aus dem Stand der Technik bekannt ist. Fig. 2a ist eine Draufsicht auf einen Ausschnitt aus einer gitterartigen Struktur, Fig. 2b eine seitliche Ansicht eines Ausschnitts dieser gitterartigen Struktur 9. Das ringförmige Vorabscheideelement 17 der Fig. 1 ist aus einer derartigen gitterartigen Struktur 9 aufgebaut, welche beispielsweise als Drahtgeflecht ausgebildet ist. Sie ermöglicht die Anlagerung von Tröpfchen 18. Kleine Tröpfchen können koaleszieren, das heisst, mindestens zwei kleine Tröpfchen formen sich zu einem grösseren Tropfen 19, der abgeschieden wird. Derartige Tropfen 19 bewegen sich unter Einfluss der Schwerkraft in Richtung der Bodenplatte, wie es in Fig. 2b sichtbar ist.

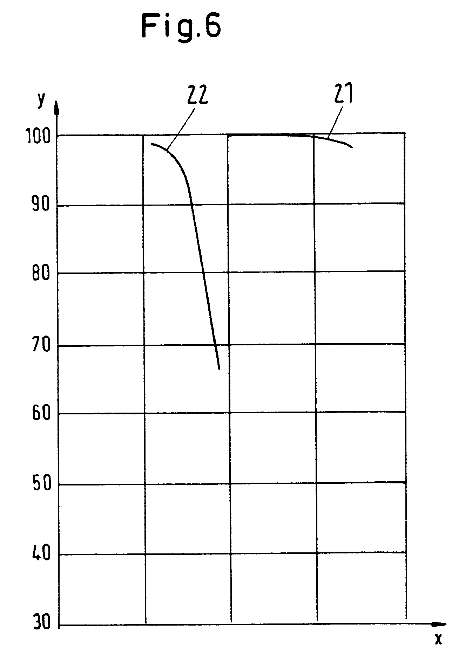

Die Abscheidung funktioniert solange einwandfrei, solange die Gasgeschwindigkeit unter einem kritischen Geschwindigkeitswert bleibt. Oberhalb dieses kritischen Geschwindigkeitswerts wird der Tropfen 19 vom Gasstrom wieder erfasst und wieder mit dem Gasstrom mitgerissen. Das heisst, die Wirksamkeit der Abscheidung nimmt stark ab, was anhand von Fig. 6 belegt wird.

Daher umfasst die erfindungsgemässe Ausführung des Tropfenabscheiders 10 Verbindungselemente 1, die in der Folge beschrieben werden. In Fig. 2c ist eine Draufsicht auf ein aufgeschnittenes Verbindungselement 1 gezeigt, wie es in Fig. 1 ausserhalb des ringförmigen Vorabscheideelements 17 vorzufinden ist. Das Verbindungselement ist hier als Rohrwandelement 3 ausgebildet. Die Tröpfchen des tröpfchenbeladenen Gases, welche das Verbindungselement 1 anströmen, treffen auf die Oberfläche des Rohrwandelements 3 auf. Die Tröpfchen 18 verteilen sich auf dessen Oberfläche, insbesondere wenn die Oberfläche aus einem Material hergestellt ist, welches eine gute Benetzbarkeit für die Flüssigkeit aufweist. Entlang des Rohrwandelements 3 sind Tröpfchen des tröpfchenbeladenen Gases in Richtung der Bodenplatte des Abscheideelements (siehe Fig. 1) als Flüssigkeitsfilm leitbar.

Das Rohrwandelement 3 weist eine Abscheideoberfläche auf, welche der gesamten äusseren Mantelfläche entspricht. Nach diesem Ausführungsbeispiel erstreckt sich somit die Abscheideoberfläche über den gesamten Umfang des Rohrwandelements 3. Die zylindrische Form des Rohrwandelements 3 begünstigt die Abscheidung der Tröpfchen auf der gesamten Mantelfläche. Die Strömung wird um das Rohrwandelement 3 herumgeführt, wie die eingezeichneten mit Doppellinie versehenen Pfeile andeuten sollen.

Da das Rohrwandelement in diesem Ausführungsbeispiel keine Kanten aufweist, ist eine Ablösung der Strömung und eine damit verbundene Wirbelbildung weniger ausgeprägt, obwohl die Strömung um das Rohrwandelement herum gelenkt ist. Das heisst, die Tröpfchen werden mit der Gasströmung umgelenkt, um das Rohrwandelement zu umströmen. Aufgrund des spezifischen Gewichts der Tröpfchen ist jedoch zu erwarten, dass die Tröpfchen die Umlenkung nicht oder allenfalls teilweise mitmachen. Daraus folgt, dass die Tröpfchen gegen die Wand des Rohrwandelements geschleudert werden und dort einen Flüssigkeitsfilm ausbilden. Dieser Flüssigkeitsfilm erstreckt sich zumindest über einen Teil der Mantelfläche des Rohrwandelements. Dieser Flüssigkeitsfilm bedeckt die Abscheideoberfläche des Rohrwandelements somit zumindest teilweise.

Fig. 3 zeigt einen Schnitt durch ein Abscheideelement 8, welches eine Mehrzahl von Verbindungselementen 1 umfasst, die zwischen einem Bodenelement, welches als Bodenplatte 11 ausgebildet ist und einem Deckenelement, welches als Deckplatte 12 ausgebildet ist, angeordnet sind. Die Verbindungselemente umfassen Rohrwandelemente 3, die dem in Fig. 2c oder Fig. 2d dargestellten Typ entsprechen. Die Bodenplatte 11 enthält eine Öffnung 37, durch welche das tröpfchenbeladene Gas in den Tropfenabscheider 10 eintritt. Auch die Deckplatte 12 kann eine Öffnung 36, aufweisen, insbesondere wenn mehrere Abscheideelemente 8 übereinander angeordnet sind, wie in Fig. 10 gezeigt.

Ein Verbindungselement ist aus dem Rohrwandelement 3 sowie einem Fusselement 14 und einem Kopfelement 15 aufgebaut. Das Fusselement 14 ist mit der Bodenplatte 11 und das Kopfelement 15 mit der Deckplatte 12 verbunden.

Die Verbindung kann, wie in diesem Ausführungsbeispiel dargestellt ist, als Steckverbindung ausgeführt sein. Jedes der Verbindungselemente weist eine Längsachse 24, 25, 26 auf.

Das Verfahren zur Herstellung des Abscheideelements gemäss Fig. 3 umfasst somit die Schritte der Herstellung der Verbindungselemente sowie das Befestigen der Verbindungselemente mit der Bodenplatte, wobei insbesondere die Verbindungselemente in entsprechende Öffnungen der Bodenplatte eingesteckt werden. Anschliessend wird die Deckplatte mit den Kopfelementen der Verbindungselemente verbunden. Die Deckplatte enthält Öffnungen zur Aufnahme der Kopfelemente. Die Kopfelemente werden in die Öffnungen der Deckplatte eingeführt. Gegebenenfalls können die Kopfelemente durch eine Klebeverbindung oder Schweissverbindung mit der entsprechenden Bodenplatte oder Deckplatte verbunden werden.

Die Verbindungselemente können unterschiedliche Durchmesser (D) aufweisen. Des weiteren kann sich der Radialabstand (R) der Längsachsen 24, 25 von dem Radialabstand der Längsachsen 25, 26 von jeweils benachbarter Reihen von Verbindungselementen unterscheiden.

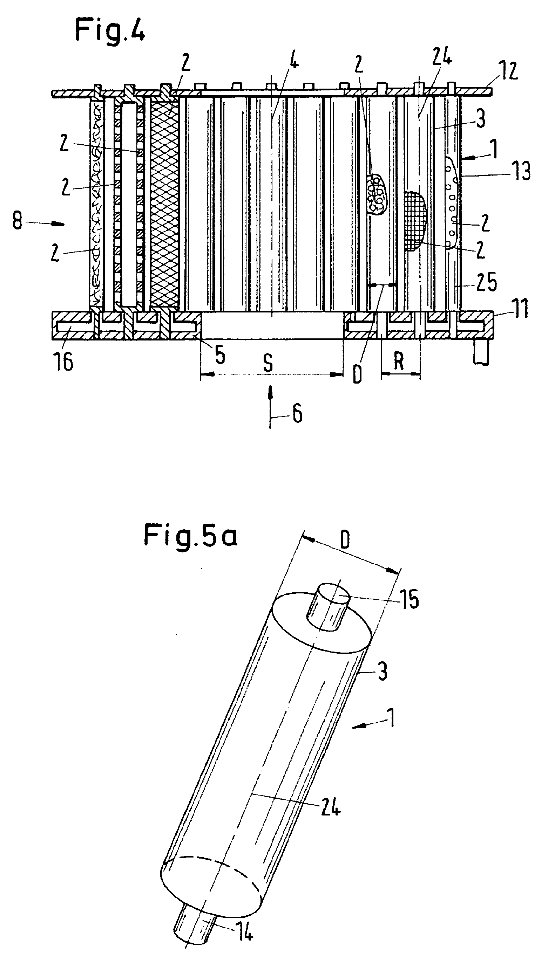

Das Verbindungselement 1 kann nach einem weiteren Ausführungsbeispiel eine Mehrzahl von gasdurchlässigen Strukturen 2 umfassen, wovon in Fig. 4 einige Varianten dargestellt sind. Diese gasdurchlässigen Strukturen können beispielsweise durch ein Drahtgeflecht gebildet werden. Alternativ dazu kann ein Gestrick oder ein Gewebe zum Einsatz kommen. Die gasdurchlässige Struktur 2 kann auch aus regellos zueinander angeordneten Elementen aufgebaut sein, wie sie beispielsweise in einer filzartigen Struktur vorliegen. Des weiteren kann die gasdurchlässige Struktur eine poröse Hülse umfassen. Verschiedene gasdurchlässige Strukturen können miteinander kombiniert werden.

Die gasdurchlässigen Strukturen 2 können auch mehrere Lagen mit unterschiedlicher Durchlässigkeit, das heisst unterschiedlich grossem Anteil an Öffnungen, umfassen. Des weiteren kann zwischen einzelnen Lagen von gasdurchlässigen Strukturen ein Abstand vorgesehen sein, sodass eine Koaleszenz von Tröpfchen erfolgen kann. Die Tröpfchen bewegen sich als Rinnsal in Richtung eines Sammelelements 16, welches auf der Bodenplatte angeordnet sein kann oder unterhalb der Bodenplatte als eine Art Auffangwanne angebracht sein kann.

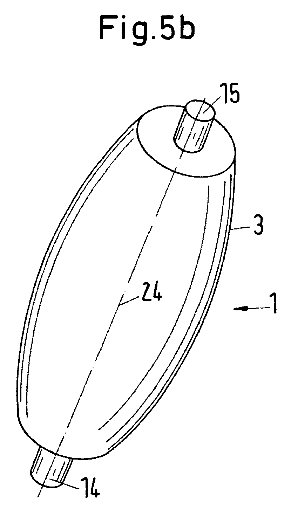

Fig. 5a zeigt ein Detail eines Verbindungselements gemäss des ersten Ausführungsbeispiels nach Fig. 1. Das Verbindungselement 1 umfasst gemäss des Ausführungsbeispiels nach Fig. 5 ein Rohrwandelement 3, welches derart ausgestaltet ist, dass Tröpfchen des tröpfchenbeladenen Gases entlang des Rohrwandelements 3 in Richtung der in Fig. 1 gezeigten Bodenplatte 11 leitbar sind. Das Rohrwandelement 3 enthält die Abscheideoberfläche. Des weiteren weist das Verbindungselement 1 ein Fusselement 14 und ein Kopfelement 15 auf, das am ersten Ende und am zweiten Ende des Rohrwandelements 3 angeordnet ist.

Das Rohrwandelement 3 hat vorzugsweise einen maximalen Durchmesser (D), der kleiner als der Innendurchmesser (S) des Strömungskanals 5 ist, siehe hierzu Fig. 3 oder Fig. 4.

Fig. 5b zeigt eine Variante eines Verbindungselements 3. Das Verbindungselement 3 ist rotationssymmetrisch um seine Längsachse 24, allerdings ist dessen Durchmesser nicht konstant. Das Verbindungselement weist wie im vorherigen Ausführungsbeispiel ein Fusselement 14 und ein Kopfelement 15 auf, welche zur Verbindung mit einer Bodenplatte bzw. Deckplatte dienen. Der Durchmesser nimmt kontinuierlich vom Fusselement 14 bis in einen Mittenbereich der Längsabmessung zu, um anschliessend wieder kontinuierlich abzunehmen. Diese Variante ist ein Ausführungsbeispiel eines Wandelements mit variablem Durchmesser. Selbstverständlich sind beliebige Variationen des Durchmessers möglich, in Abhängigkeit davon, wie der Gasstrom auf die Abscheideoberflächen verteilt werden soll.

Fig. 6 zeigt einen Vergleich der Güte der Abscheidung eines Tropfenabscheiders nach dem Stand der Technik mit einem erfindungsgemässen Tropfenabscheider gemäss Fig. 1, wobei auf der x-Achse der Lambda-Wert, ein Mass für die Kapazität des Abscheiders, aufgetragen ist. Die y-Achse zeigt die Effizienz der Abscheidung in %.

Die Kurve mit dem Bezugszeichen 21 zeigt den Abscheidegrad eines tröpfchenbeladenen Gases, hier Diethylenglykol. Es wurde ein Tropfenabscheider gemäss Fig. 1 eingesetzt. Dieser Tropfenabscheider besteht aus einem Koaleszenzteil, welcher gemäss EP 1 930 059 A1 ausgestaltet ist und einem Entwässerungsteil, welcher Verbindungselemente 1 gemäss Fig. 1, 3 oder 5 enthält. Die Messungen wurden an einem Abscheideelement 8 durchgeführt, welches einen Durchmesser des Strömungskanals von 85 mm hat. Der Strömungskanal 5 ist von einem ringförmigen Vorabscheideelement 17 umgeben, welches den Koaleszenzteil bildet. An das ringförmige Vorabscheideelement schliesst eine Mehrzahl von Reihen von Verbindungselementen 1 an, wie auch in Fig. 1 gezeigt ist. Der Aussendurchmesser des ringförmigen Vorabscheideelements beträgt für den Versuch 142 mm. Die gitterartige Struktur 9 des Koaleszenzteils bestehen aus Stahl und sind aus einem Metallgewebe aufgebaut, welches mehrere Lagen mit gewelltem in Zylinderform aufgewickelten Profil sowie mehrere Lagen mit zylindrischem Profil aufweist.

Die Strukturen des Entwässerungsteils können wahlweise aus Kunststoff oder Metall bestehen, in Abhängigkeit von der Temperatur und chemischen Zusammensetzung des Gasstroms und möglicher Interaktionen mit dem Polymer. Der Innendurchmesser des Entwässerungsteils betrug für die Tests 142 mm und der Aussendurchmesser 260 mm. Es wurden 6 Reihen an Verbindungselementen eingesetzt, wobei der Durchmesser des Kreises (K), welchen die Längsachsen der Verbindungselemente aufspannen, die Durchmesser (D) der Verbindungselemente in jedem Kreis und die Anzahl der Verbindungselemente in jedem Kreis in nachfolgender Zusammenstellung wiedergegeben sind:

| K | 153 | 168 | 181.4 | 202 | 225 | 243 |
|---|---|---|---|---|---|---|
| D | 6.5 | 6.5 | 6.5 | 9 | 9 | 9 |
| Anzahl | 48 | 48 | 48 | 48 | 48 | 48 |
| Lückengrad | 0.65 | 0.59 | 0.55 | 0.68 | 0.61 | 0.57 |

Auf der x-Achse der Fig. 6 ist jeweils der sogenannte Lambda-Wert bezogen auf die Mantelfläche des Tropfenabscheiders eingetragen Der Lambda-Wert wird auch als Souders-Brown-Faktor bezeichnet. Mit dem Souders-Brown Faktor wird die maximale Gasgeschwindigkeit in Flüssig-Gas Trennbehältern ermittelt:

$$V = Lambda \left((\rho_L - \rho_V)/ \rho_V\right)^{1/2}$$

V = maximal zulässige Gasgeschwindigkeit in m/s
$\rho_L$ = Dichte der Flüssigkeit
pv = Dichte des Gases
Lambda = 0.107 m/s wenn der Behälter einen Gestrickabscheider (mesh pad) enthält, welcher im Gegenstrom betrieben wird

Die Kurve mit dem Bezugszeichen 22 zeigt den Abscheidegrad einer mit Tröpfchen aus Diethylenglykol beladenen Umgebungsluft bei Verwendung eines Tropfenabscheiders nach dem Stand der Technik, wie beispielsweise in der EP 1 930 059 A1 beschrieben . Ein Vergleich der Kapazität eines Abscheideelements gemäss EP 1 930 059 A1 und einem Abscheideelement gemäss Fig. 1 ergibt eine um bis zu 40% höhere Kapazität.

Es hat sich in den Versuchen auch ergeben, dass die Qualität der Abscheidung stark vom Stoffsystem abhängt. Insbesondere spielt die Benetzbarkeit der Oberflächen der Verbindungselemente eine Rolle. Bei einer guten Benetzbarkeit erfolgt die Anlagerung und Koaleszenz der Flüssigkeit besser, das heisst es ist möglich, den Tropfenabscheider mit höherer Kapazität zu betreiben, das heisst mit erhöhter Gasgeschwindigkeit.

In Fig. 7a ist eine Variante dargestellt, nach welcher das Abscheideelement 8 einstückig aufgebaut ist. Das Bodenelement 11, das Deckenelement 12 und die Verbindungselemente 1, welche wie in Fig. 3 Rohrwandelemente 3, 13 enthalten, bestehen aus einem einzigen Stück. Das tröpfchenbeladene Gas strömt wie in den vorhergehenden Ausführungsbeispielen durch einen Strömungskanal 5 in den Innenraum des Abscheideelements.

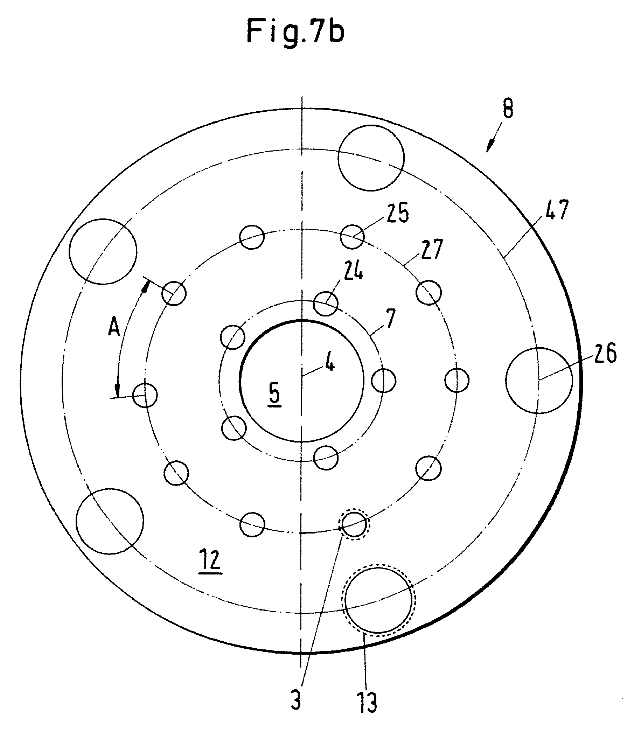

Die Verbindungselemente 1 in Fig. 7b sind derart zwischen Bodenplatte 11 und Deckplatte 12 angeordnet, dass ihre Längsachsen 24 auf einer geschlossenen Kurve 7 liegen, welche um den Strömungskanal 5 herum verläuft. In dem vorliegenden Ausführungsbeispiel ist diese Kurve 7 ein Kreis. Gemäss Fig. 1 oder auch Fig. 7b sind eine Mehrzahl von konzentrischen Kreisen 7, 27, 47 vorgesehen, deren gemeinsame Mittelpunkte auf der Längsachse 4 des Strömungskanals 5 liegen.

Auf jedem dieser Kreise liegen die Mittelpunkte von Längsachsen 24, 25, 26 von Verbindungselementen 1. Die Verbindungselemente haben zylinderförmige Form. In Fig. 1 berühren sich in einer Reihe benachbarte Verbindungselemente nicht, sodass zwischen zwei benachbarten Verbindungselementen ein Spalt frei bleibt. Das heisst, die Längsachsen von je zwei benachbarten Verbindungselementen 1 in derselben Reihe sind in einem Abstand (A) zueinander angeordnet, der grösser als die Summe der Radien der beiden angrenzenden Rohrwandelemente 3 ist.

Das Verfahren zur Herstellung des Abscheideelements gemäss Fig. 7a oder Fig. 7b ist bevorzugt ein Gussverfahren, beispielsweise ein Spritzgussverfahren. Es kann spritzgiesstechnisch auch von Vorteil sein, das Bodenelement 11 oder Deckenelement 12 separat zu fertigen, da je nach Anzahl und Anordnung der Verbindungselemente die Zwischenräume 31, 32, durch welche im Betriebszustand das tröpfchenbeladene Gas hindurchgeführt wird, schwierig herstellbar sein können.

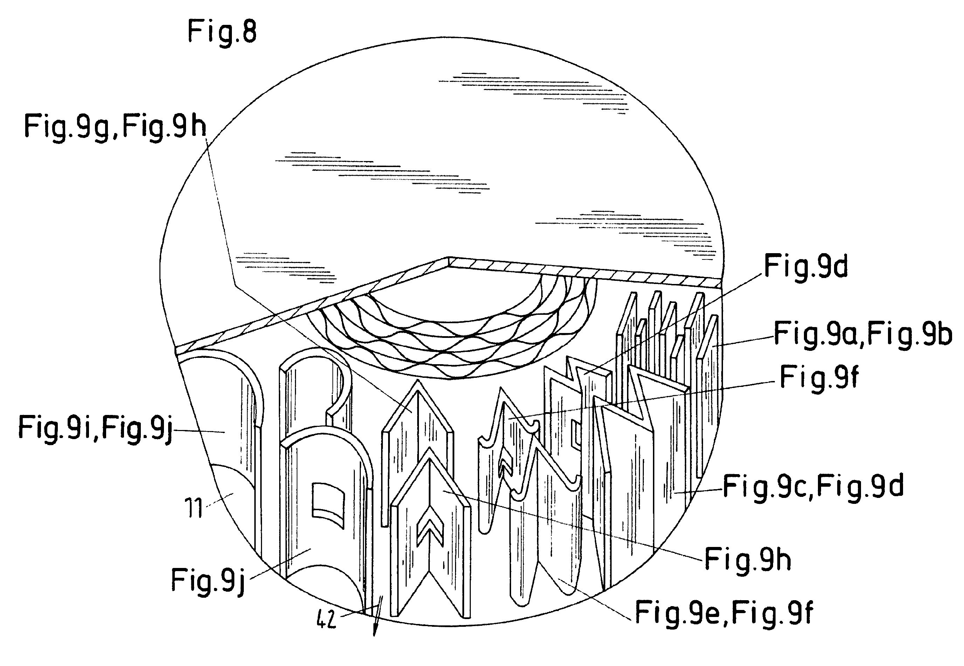

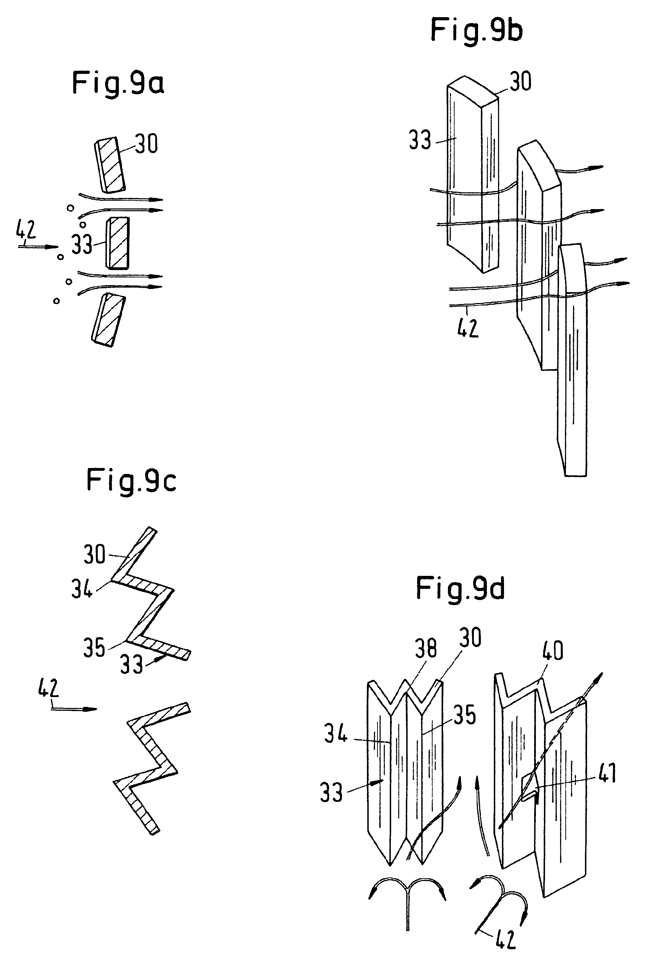

Fig. 8 zeigt einen Tropfenabscheider, welcher verschiedene Typen von Verbindungselementen enthält. Jedes dieser Verbindungselemente soll nachfolgend anhand der in Fig. 8 genannten Fig. 9a bis 9j genauer beschrieben werden. Die Varianten können miteinander beliebig kombiniert werden.

Fig. 9a ist eine Draufsicht auf eine erste Variante von Verbindungselementen für den Tropfenabscheider nach Fig. 8. Die Verbindungselemente 30 sind als Wandelemente ausgebildet, welche eine im wesentlichen rechteckige Querschnittsfläche aufweisen. Die Höhe der Wandelemente entspricht mindestens dem Abstand zwischen der Bodenplatte und der Deckplatte. Die Wandelemente haben eine Breite, die gemäss Fig. 9a im wesentlichen konstant ist. Auch die Dicke der Wandelemente ist im wesentlichen konstant. Selbstverständlich könnte die Breite auch relativ zur Höhe des Wandelements variieren.

Nach einer besonders einfach herzustellenden Variante sind die Wandelemente Teil eines Blechs, aus welchem Zwischenräume ausgestanzt worden sind. Die Zwischenräume bilden Durchtrittsöffnungen für das tröpfchenbeladene Gas aus. Das tröpfchenbeladene Gas trifft auf die Innenseite des Verbindungselements 30 entlang dessen Breite auf. Tröpfchen werden auf der Abscheideoberfläche 33, welche sich entlang der Breite über die Höhe der Wandelemente erstreckt, abgeschieden und bilden einen Flüssigkeitsfilm auf dieser Abscheideoberfläche aus. Der Flüssigkeitsfilm fliesst entlang der Abscheideoberfläche in Richtung der Bodenplatte 11 (siehe Fig. 8) ab.

Die Verbindungselemente 30 können wie in Fig. 7b ebenfalls auf konzentrischen Kreisen angeordnet sein. Die Breite einzelner Verbindungselemente kann unterschiedlich sein, auch die Abstände zwischen je zwei benachbarten Verbindungselementen können sich unterscheiden.

Fig. 9c und Fig. 9d zeigen eine zweite Variante der Verbindungselemente. Jedes der Verbindungselemente zeigt ein Zick-Zack-Profil in Form eines W. Die Luvseite wird vom unteren Teil des W gebildet. Das heisst, es werden zwei Strömungskanten 34, 35 ausgebildet. Zwischen den beiden Strömungskanten 34, 35 ist ein offener Kanal 38 ausgebildet. In diesem offenen Kanal kann sich die auf der Abscheideoberfläche 33 abgeschiedene Flüssigkeit sammeln und in Richtung des Bodenelements geleitet werden.

Fig. 9d zeigt auch eine alternative Ausführungsform des Verbindungselements 30, das Verbindungselement 40. Es unterscheidet sich vom Verbindungselement 30 dahingehend, dass es eine fensterartige Öffnung 41 aufweist. Durch diese Öffnung 41 kann sowohl Gas hindurchtreten als auch Flüssigkeit auf die Leeseite des Verbindungselements 40 geleitet werden.

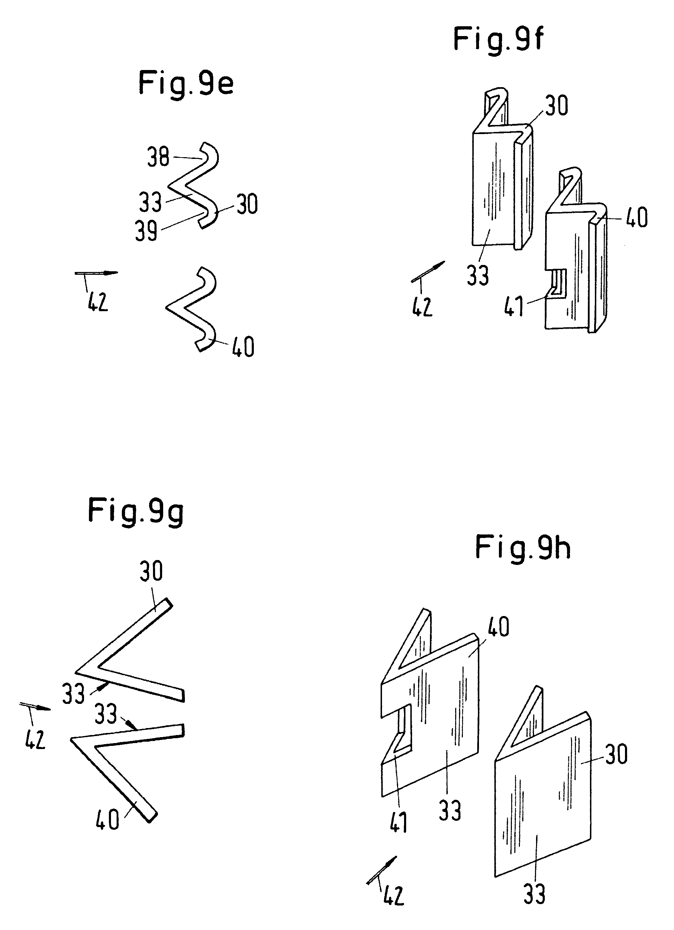

Fig. 9e und Fig. 9f zeigen eine dritte mögliche Ausgestaltung der Verbindungselemente. Die Verbindungselemente 30, 40 der Fig. 9e oder 9f unterscheiden sich von den Verbindungselementen der Fig. 9d und Fig. 9e nur dahingehend, dass die äusseren Schenkel des W verkürzt sind und die Oberseite des verkürzten W die Luvseite der Verbindungselemente ausbildet. Die Abscheideoberfläche 33 wird somit von einem Paar offener Kanäle 38, 39 begrenzt. In diesen offenen Kanälen kann die Flüssigkeit gesammelt werden und weitgehend unbehindert von der Gasströmung abfliessen.

In Fig. 9f enthält das Verbindungselement 40 wiederum eine fensterartige Öffnung 41, insbesondere um Flüssigkeit von der Luvseite auf die Leeseite des Verbindungselements zu leiten.

Fig. 9g und Fig. 9h unterscheiden sich von den Verbindungselementen gemäss Fig. 9e und 9f nur dergestalt, dass der Querschnitt v-förmig ist. Die Abscheideoberfläche 33 enthält in diesem Fall keinen offenen Kanal.

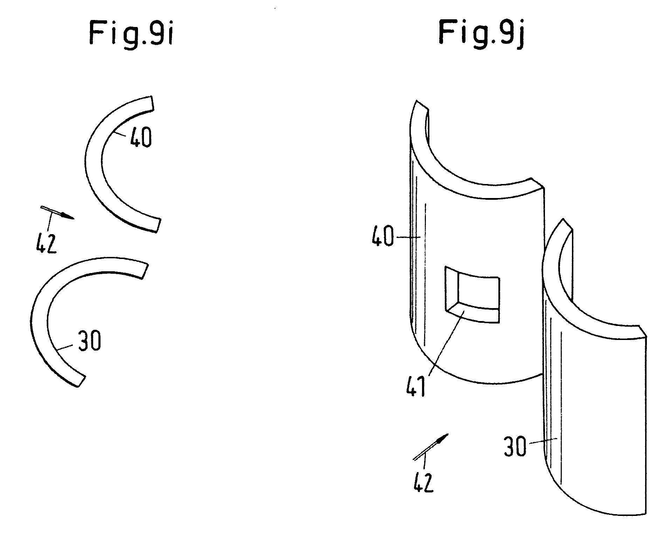

Fig. 9i und Fig. 9j zeigen eine Variante, nach welcher der Querschnitt der Verbindungselemente 30, 40 u-förmig ausgebildet ist. In Fig. 9j ist zusätzlich noch gezeigt, dass das Verbindungselement 40 eine fensterartige Öffnung 41 aufweist.

Das Verbindungselement nach jedem der vorhergehenden Ausführungsbeispiele kann aus Metall, einer Keramik oder auch aus Kunststoff bestehen oder einen Verbund dieser Materialien umfassen.

Fig. 10 zeigt einen eine Anordnung zur Abscheidung von Tröpfchen aus einem tropfenbeladenen Gas umfassend einen Strömungskanal 5, durch welchen das tröpfchenbeladene Gas entlang einer Hauptströmungsrichtung 6 hindurch geleitet wird. Ein wirbelerzeugender Apparateteil 51 ist im Strömungskanal 5 vorgesehen, mittels welchem das tröpfchenbeladene Gas in Richtung eines der Abscheideelemente 8 geleitet wird. Mittels des wirbelerzeugenden Apparateteils 51 wird der Strömung eine Richtungsänderung aufgezwungen, wodurch die Geschwindigkeit der Gas-und Flüssigkeitsteilchen eine Radialkomponente erhält. Durch diese Radialkomponente wird der Gasstrom in Richtung der inneren Mantelfläche 52 umgeleitet, welche den Strömungskanal 5 umgibt. Der Gasstrom tritt dann über in der inneren Mantelfläche vorgesehene Öffnungen 53 in im wesentlichen radialer Richtung in das jeweilige Abscheideelement 8 ein. Ein Teil der Flüssigkeitströpfchen kann dabei bereits durch die zusätzliche Radialkomponente der auf den Tropfen wirkenden Kraft auf die innere Mantelfläche auftreffen und dort abgeschieden werden.

Jedes der Abscheideelemente 8 ist im wesentlichen ringförmig um den Strömungskanal 5 angeordnet und erstreckt sich zumindest über einen Teil der Länge des Strömungskanals 5. In Fig. 10 sind beispielsweise vier Abscheideelemente 8 übereinander angeordnet. Ein Abscheideelement 8 umfasst eine Mehrzahl von gitterartigen Strukturen 9 sowie ausserhalb derselben eines oder eine Mehrzahl von Verbindungselementen 1 nach einem der vorherigen Ausführungsbeispiele.

Für die Anordnung von gitterartigen Strukturen 9 im Abscheideelement 8 haben sich eine Reihe von Ausführungsformen bewährt. Das Abscheideelement gemäss Fig. 10 enthält abwechselnd zylinderförmige Strukturen 56 und wellenförmige Strukturen 57. Die zylinderförmigen Strukturen 56 sind parallel zur Hauptströmungsrichtung 6 angeordnet. Zwischen zwei benachbarten zylinderförmigen Strukturen 56 ist jeweils eine wellenförmige Struktur 57 angeordnet.

Vorteilhafterweise sind die wellenförmigen Strukturen 57 derart angeordnet, dass sich ein Gefälle ausbilden kann, sodass die an den gitterartigen Strukturen koaleszierende Flüssigkeit abfliessen kann.

Die Anzahl der übereinander zu stapelnden Abscheideelemente ist durch die Beladung sowie die Grössenverteilung der Tröpfchen im Gas am Eintritt in die Anordnung bestimmt. Bei einer sehr breiten Verteilung mit stark voneinander abweichenden Tropfengrössen sowie hoher Flüssigkeitsbeladung wird eine grössere Bauhöhe für jedes einzelne Abscheideelement 8 oder ein Stapel von mehreren übereinander angeordneten Abscheideelementen 8 erforderlich sein. In diesem Fall werden die grossen Tropfen im wesentlichen durch das Abscheideelement 8 ausgetragen, das in nächster Nähe zum wirbelerzeugenden Apparateteil 51 angeordnet ist, während die kleinen, leichten Tröpfchen eine grössere Strecke gemeinsam mit dem Gasstrom zurücklegen, sodass sie erst in weiter entfernten Abscheideelementen 8 ausgetragen werden.

Abscheideelemente 8 mit gitterartigen Strukturen 9 von verschiedenem Typus sowie mit verschiedenen Anordnungen von Verbindungselementen können beliebig kombiniert werden. Die gitterartigen Strukturen unterscheiden sich beispielsweise in der Grösse der Durchtrittsöffnungen, sodass in Analogie zu einer Sieb- oder Filterstruktur, Strukturen unterschiedlicher Durchlässigkeit in einem Tropfenabscheider kombinierbar sind. Hierzu können beispielsweise Gewebe unterschiedlicher Feinheit zum Einsatz kommen. Die Verbindungselemente können in beliebiger Kombination unter Anpassung des Lückengrads an die entsprechende Trennaufgabe mit den gitterartigen Strukturen kombiniert werden. Alternativ hierzu können auch Abscheideelemente ohne gitterartige Strukturen mit Abscheideelementen abwechseln, die gitterartige Strukturen enthalten.

Der wirbelerzeugende Apparateteil 51 ist im Inneren des Strömungskanals 5 angeordnet und enthält eine Mehrzahl von Leitflächen 61, wodurch zumindest ein Teil des Gases von der Hauptströmungsrichtung 6 in Richtung der Abscheideelemente 8 umlenkbar ist. Die Leitflächen 61 des wirbelerzeugenden Apparateteils 1 sind innerhalb eines Rohrstücks 62 stromaufwärts der inneren Mantelfläche 52 um eine in Hauptströmungsrichtung 6 ausgerichtete Zentralachse 60 angeordnet.

Nach dem in Fig. 10 dargestellten Ausführungsbeispiel sind die Leitflächen 61 an einer Stange 63 befestigt, welche entlang der Zentralachse 60 angeordnet ist. Die Leitflächen 61 schliessen mit einer Ebene, die normal zur Hauptströmungsrichtung 6 ausgerichtet ist, einen Neigungswinkel 64 ein, der grösser als 20° und kleiner als 70° ist, vorzugsweise zwischen 45° und 65° liegt. Der Neigungswinkel einer Leitfläche 61 kann auch variabel sein. Beispielsweise kann der Neigungswinkel 64 in einem zentralachsennahen Bereich des Rohrstücks 62 geringer sein, das heisst, die Leitflächen 2 flacher angeordnet sein, als in einem wandnahen Bereich des Rohrstücks 62.

Zusätzlich zu dem wirbelerzeugenden Apparateteil können im Strömungskanal 5 weitere Umlenkelemente 70 vorgesehen sein. Insbesondere können um die Zentralachse 60 der Anordnung scheibenförmige Umlenkelemente 70 angeordnet sein, welche der Verbesserung der Strömungsführung dienen.

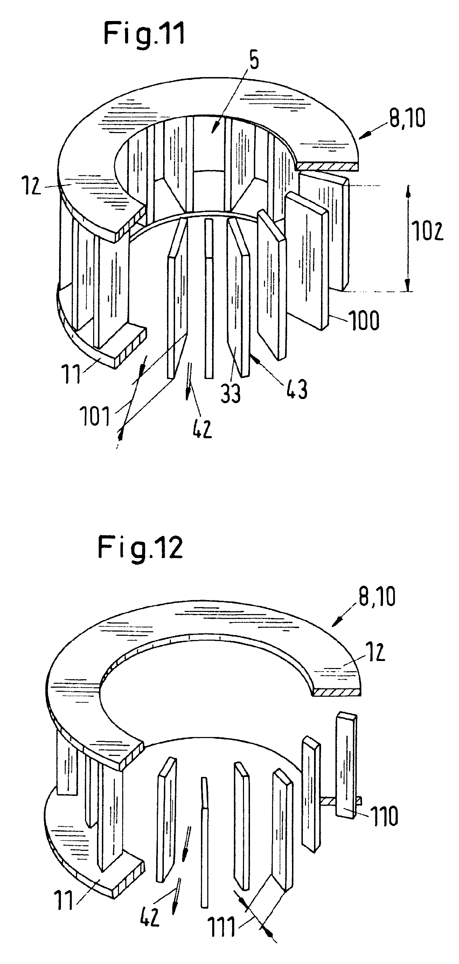

Fig. 11 zeigt ein Ausführungsbeispiel eines Tropfenabscheiders nach einem vierten Ausführungsbeispiel der Erfindung. Das Bodenelement 11 und das Deckenelement 12 des Tropfenabscheiders sind teilweise geschnitten dargestellt, damit die Verbindungselemente 100 besser sichtbar sind. Die Verbindungselemente 100 sind als plattenförmige Elemente ausgebildet, deren mittlere Länge 101 sich im wesentlichen in radialer Richtung erstreckt, deren Breite sich in Umfangsrichtung erstreckt und wesentlich kleiner als deren mittlere Länge 101 ist und deren Höhe 102 dem Abstand zwischen dem Bodenelement 11 und dem Deckenelement 12 entspricht. Das Verbindungselement 101 weist zwei Abscheideoberflächen 33, 43 auf. Auf jeder der Abscheideoberflächen bildet sich ein Flüssigkeitsfilm aus, welcher entlang der Abscheideoberfläche in Richtung des Bodenelements fliesst, wenn der Tropfenabscheider von einem tröpfchenbeladenen Gas durchströmt wird.

Die mittlere Länge 101 des Verbindungselements 100 entspricht im wesentlichen dem Radialabstand zwischen der äusseren Mantelfläche des Strömungskanals 5 und der äusseren Mantelfläche des Abscheideelements 8, welche im wesentlichen von den Aussendurchmessern des Bodenelements 11 oder des Deckenelements 12 gebildet ist.

Selbstverständlich kann nach einer zeichnerisch nicht dargestellten Alternative ein ringförmiges Vorabscheideelement 17 zwischen dem Strömungskanal und dem Verbindungselement angeordnet sein, wie es beispielsweise in Fig. 1a oder Fig. 1b dargestellt ist. Des weiteren können die Verbindungselemente 100 in Kombination mit jedem der Verbindungselemente nach einem der vorhergehenden oder nachfolgenden Ausführungsbeispiele angeordnet sein.

Fig. 12 zeigt einen Tropfenabscheider nach einem fünften Ausführungsbeispiel der Erfindung, nach welchem abweichend von Fig. 11 die Länge 111 der Verbindungselemente 110 kleiner als der Radialabstand zwischen der äusseren Mantelfläche des Strömungskanals 5 und der äusseren Mantelfläche des Abscheideelements 8 ist. Die Verbindungselemente 111 erstrecken sich vom Bodenelement 11 zu dem Deckenelement 12. Das Bodenelement 11 und das Deckenelement 12 sind in Fig. 12 teilweise aufgeschnitten, um die Verbindungselemente besser sichtbar zu machen. Die Verbindungselemente sind mit dem Bodenelement 11 und/oder dem Deckenelement 12 verbunden, beispielsweise durch Schweissen, Kleben, eine Steckverbindung oder eine Schnappverbindung.

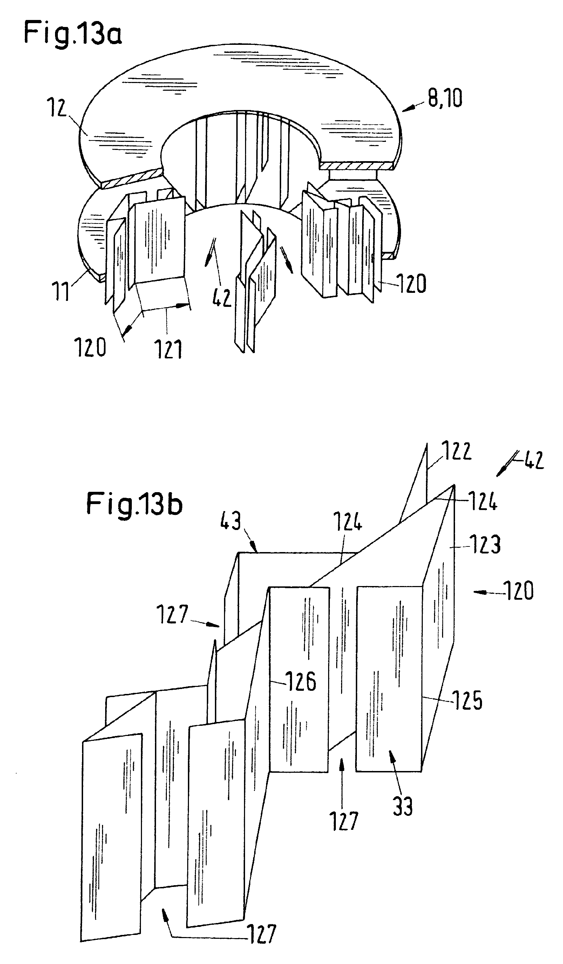

Fig. 13a zeigt einen Tropfenabscheider nach einem sechsten Ausführungsbeispiel der Erfindung, welcher ein Bodenelement 11, ein Deckenelement 12 sowie eine Mehrzahl von Verbindungselementen 120 aufweist, welche zwischen dem Bodenelement und dem Deckenelement angeordnet sind. Auch die Verbindungselemente 120 erstrecken sich in im wesentlichen radialer Richtung, sodass das tröpfchenbeladene Gas an den Verbindungselementen vorbei vom Strömungskanal 5 in Richtung der äusseren Mantelfläche des Abscheideelements 8 strömen kann, also in im wesentlichen radialer Richtung strömt.

Fig. 13b zeigt ein Detail eines Verbindungselements 120 gemäss Fig. 13a. Das Verbindungselement 120 besteht aus einem ersten dünnwandigen Plattenelement 122 und einem zweiten dünnwandigen Plattenelement 123. Das erste dünnwandige Plattenelement ist im wesentlichen parallel zum zweiten dünnwandigen Plattenelement angeordnet, sodass eine doppelwandige Ausführung für jedes Verbindungselement 120 erhalten wird. Die beiden Plattenelemente sind durch Abstandselemente 124 miteinander verbunden. Zur Vereinfachung der zeichnerischen Darstellung wird die Wandstärke der Plattenelemente nicht gezeigt, obwohl auch die Plattenelemente 122, 123 sowie das Abstandselement 124 eine endliche Wandstärke aufweisen.

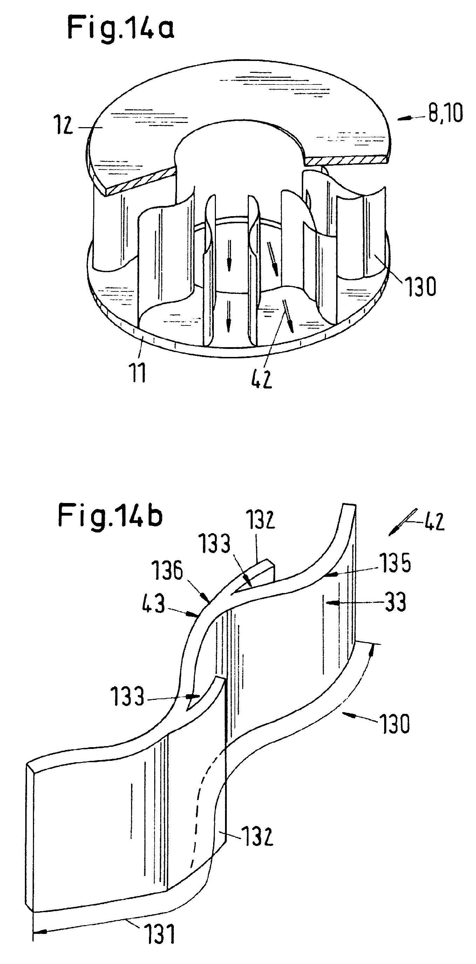

Jedes der Plattenelemente weist eine wellenförmige Abscheideoberfläche 33, 43 auf, das heisst, in einer Ansicht auf das Bodenelement weist die Abscheideoberfläche zumindest einen Wellenberg 125 und/oder ein Wellental 126 auf. Der Wellenberg und/oder das Wellental ist als Spitze ausgebildet oder kann wie in Fig. 14a und 14b dargestellt ist, als Rundung ausgebildet sein.

Jedes der Plattenelemente kann eine Öffnung 127 aufweisen. Diese Öffnung 127 kann insbesondere als schlitzförmige Öffnung ausgebildet sein. Diese Öffnung 127 dient der Ableitung der Flüssigkeit von der Abscheideoberfläche 33, 43. Hierdurch kann vermieden werden, dass bereits auf der Abscheideoberfläche befindliche, also abgeschiedene Flüssigkeit wieder vom Gasstrom erfasst wird und Flüssigkeit mit dem Gasstrom mitgerissen werden kann.

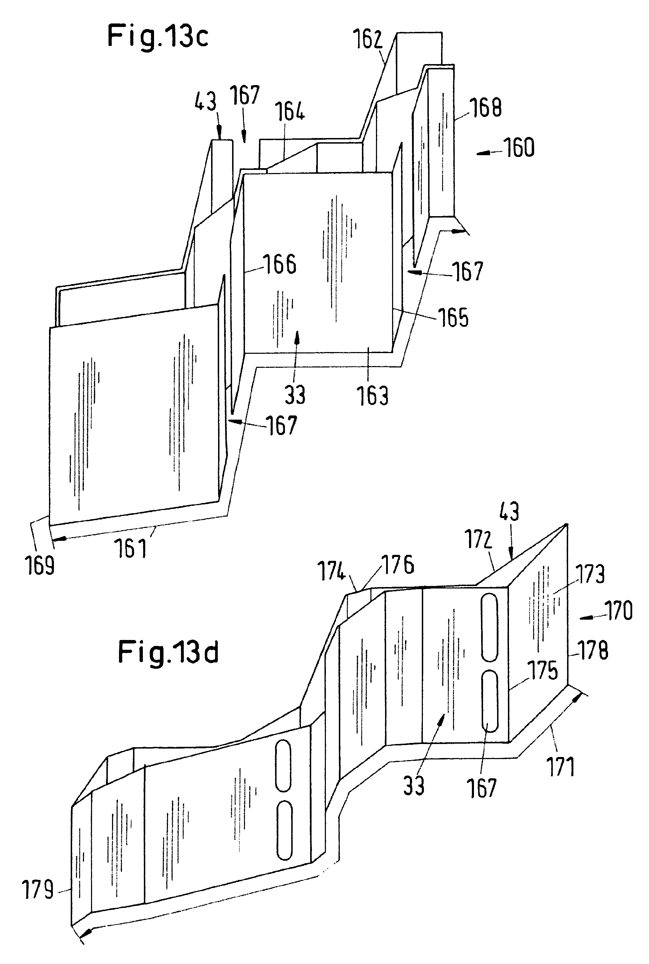

Fig. 13c zeigt ein Detail einer Variante eines Verbindungselements 160 gemäss Fig. 13a. Das Verbindungselement 160 besteht aus einem ersten dünnwandigen Plattenelement 162 und einem zweiten dünnwandigen Plattenelement 163. Das erste dünnwandige Plattenelement ist im wesentlichen parallel zum zweiten dünnwandigen Plattenelement angeordnet, sodass eine doppelwandige Ausführung für jedes Verbindungselement 160 erhalten wird. Die beiden Plattenelemente 162, 163 sind durch ein Abstandselement 164 miteinander verbunden. Zur Vereinfachung der zeichnerischen Darstellung wird die Wandstärke der Plattenelemente nicht gezeigt, obwohl auch die Plattenelemente 162, 163 sowie das Abstandselement 164 eine endliche Wandstärke aufweisen.

Die Länge des Verbindungselements entspricht der Länge des entsprechenden dünnwandigen Plattenelements 162, 163 vor dessen Faltung zu einem wellenartigen Profil. Die Länge 161 ist als Verbindungslinie zwischen der Innenkante 168 und der Aussenkante 169 des Verbindungselements.

Jedes der Plattenelemente weist eine wellenförmige Abscheideoberfläche 33, 43 auf, das heisst, in einer Ansicht auf das Bodenelement weist die Abscheideoberfläche zumindest einen Wellenberg 165 und/oder ein Wellental 166 auf. Der Wellenberg und/oder das Wellental ist als Spitze ausgebildet. In der Abscheideoberfläche kann mindestens eine Öffnung 167 vorgesehen sein, die zur Ableitung der Flüssigkeit von einer der Abscheideoberflächen 33, 43 dient.

Im Unterschied zu der Variante gemäss Fig. 13b erstreckt sich das Abstandselement 164 von der Innenkante 168 zur Aussenkante 169. In dieser Darstellung ist der Normalabstand zwischen dem ersten dünnwandigen Plattenelement 162 und dem zweiten dünnwandigen Plattenelement 163 kleiner als der Normalabstand zwischen zumindest einem Teil der Wellenberge 165 und den entsprechenden benachbarten Wellentälern 166. Daher enthält das Abstandselement 164 ebenfalls ein wellenartiges Profil, um zwischen dem ersten und zweiten Plattenelement 163, 164 angeordnet werden zu können. Zusätzlich kann das Abstandselement 164 insbesondere bei dünnwandigen Plattenelementen eine Versteifung des Verbindungselements bewirken.

Fig. 13d zeigt ein Detail einer weiteren Variante eines Verbindungselements 170 gemäss Fig. 13a. Das Verbindungselement 170 besteht aus einem ersten dünnwandigen Plattenelement 172 und einem zweiten dünnwandigen Plattenelement 173. Das erste dünnwandige Plattenelement ist zumindest teilweise in berührendem Kontakt zweiten dünnwandigen Plattenelement angeordnet, sodass eine doppelwandige Ausführung für jedes Verbindungselement 170 erhalten wird. Zur Vereinfachung der zeichnerischen Darstellung wird auch in Fig. 13d die Wandstärke der Plattenelemente nicht gezeigt, obwohl auch die Plattenelemente 172, 173 eine endliche Wandstärke aufweisen. Im Unterschied zu den Varianten gemäss Fig. 13b oder 13c entfällt das Abstandselement. Das erste und das zweite Plattenelement 172, 173können an den Kontaktstellen zumindest teilweise miteinander verbunden sein, beispielsweise durch Schweissen, Nieten oder Kleben.

Die Länge des Verbindungselements entspricht der Länge des entsprechenden dünnwandigen Plattenelements 172, 173 vor dessen Faltung zu einem wellenartigen Profil. Die Länge 171 ist als Verbindungslinie zwischen der Innenkante 178 und der Aussenkante 179 des Verbindungselements.

Jedes der Plattenelemente 172, 173 weist eine wellenförmige Abscheideoberfläche 33, 43 auf, das heisst, in einer Ansicht auf das Bodenelement weist die Abscheideoberfläche zumindest einen Wellenberg 175 und/oder ein Wellental 176 auf. Der Wellenberg und/oder das Wellental kann als Spitze mit einem Plateau 174 ausgebildet sein. In der Abscheideoberfläche 33, 43 kann mindestens eine Öffnung 167 vorgesehen sein, die zur Ableitung der Flüssigkeit von einer der Abscheideoberflächen 33, 43 dient. Im Unterschied zu den vorherigen Varianten ist die Öffnung als Loch in der Abscheideoberfläche ausgebildet. Diese Öffnung befindet sich an einer Stelle, an welcher sich das erste Plattenelement 172 nicht mit dem zweiten Plattenelement berührt. Daher kann die Flüssigkeit, welche durch das Loch in den Zwischenraum zwischen dem ersten und zweiten Plattenelement 172, 173 eintritt, im wesentlichen unbehindert von der Gasströmung abgeleitet werden. Vorzugsweise ist hierzu im Bodenelement eine Öffnung oder ein Kanal vorgesehen, der aber zeichnerisch nicht dargestellt ist.

Fig. 14a zeigt einen Tropfenabscheider nach einem siebenten Ausführungsbeispiel der Erfindung. In der Fig. 14a wurde nur das Deckenelement 12 des Abscheideelements 8 geschnitten, das Bodenelement 11 wird nicht geschnitten dargestellt. Zwischen dem Bodenelement und dem Deckenelement 12 erstrecken sich eine Mehrzahl von Verbindungselementen 130. Die Verbindungselemente 130 weisen gemäss dieses Ausführungsbeispiels ebenfalls eine wellenförmige Abscheideoberfläche 33, 43 auf, abweichend von Fig. 13a, 13b wird jedoch hier auf eine doppelwandige Ausführung des Verbindungselements verzichtet. Zwischen den Verbindungselementen strömt das tröpfchenbeladene Gas vom Strömungskanal 5 in Richtung der äusseren Mantelfläche des Abscheideelements. Die äussere Mantelfläche erstreckt sich zwischen dem Bodenelement 11 und dem Deckenelement 12 an deren äusseren Umfang, gebildet durch den entsprechenden äusseren Radius.

Fig. 14b zeigt ein Detail eines Verbindungselements gemäss Fig. 14a. Das Verbindungselement weist eine Länge 131 auf, die im wesentlichen der Kontur des Verbindungselements 130 entspricht. Das Verbindungselement weist eine erste und eine zweite Abscheideoberfläche 33, 43 mit einem wellenförmigen Profil auf. Die Abscheideoberfläche enthält zumindest einen Wellenberg 135 und/oder ein Wellental 136. Der Wellenberg und/oder das Wellental ist als Rundung ausgebildet. Selbstverständlich ist es auch möglich zumindest eines der Wellenberge oder Wellentäler als Spitze auszuführen.

Auf der Abscheideoberfläche 33, 43 kann zumindest ein Umleitungselement angeordnet sein, welches als Vorsprung 132 ausgebildet ist. Vorzugsweise befindet sich zumindest je ein Vorsprung auf der Abscheidoberfläche 33 und ein Vorsprung auf der Abscheideoberfläche 43. Diese Vorsprünge bilden auf der Leeseite einen offenen Kanal 133 aus, in welchem Flüssigkeit unbehindert vom Gasstrom abgeleitet werden kann.

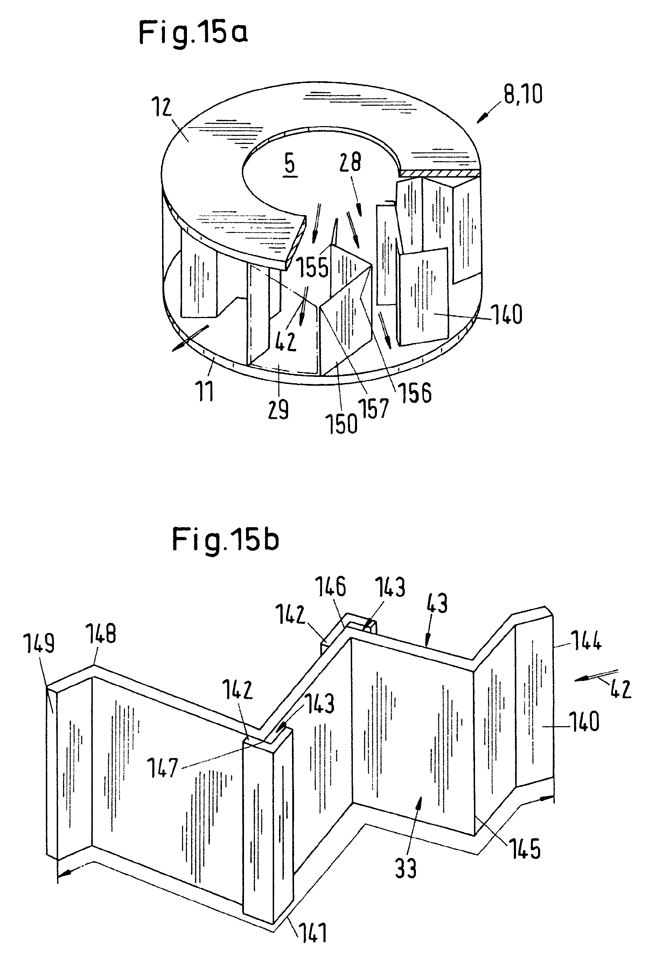

Fig. 15a zeigt ein Abscheideelement 8 für einen Tropfenabscheider 10 nach einem achten Ausführungsbeispiel der Erfindung. Der Tropfenabscheider 10 enthält wiederum eine Mehrzahl von Verbindungselementen 140, 150, welche zwischen dem Bodenelement 11 und dem teilweise geschnitten dargestellten Deckenelement 12 angeordnet sind. Fig. 15a zeigt zwei verschiedene Ausführungsformen der Verbindungselemente, ein Verbindungselement 140, welches in Fig. 15b im Detail dargestellt ist und ein Verbindungselement 150.

Fig. 15b zeigt ein Detail eines Verbindungselements 140 gemäss Fig. 15a. Das Verbindungselement 140 weist eine erste und eine zweite Abscheideoberfläche 33, 43 mit einem wellenförmigen Profil auf. Die Abscheideoberfläche enthält zumindest einen Wellenberg 145 und/oder ein Wellental 146. Der Wellenberg und/oder das Wellental ist als Spitze ausgebildet. Auf zumindest einem der Wellenberge 145 oder Wellentäler 146 kann ein Umleitungselement, welches als Vorsprung 142 ausgebildet ist, angeordnet sein. Der Vorsprung 142 bildet mit der Abscheideoberfläche 33, 43 auf der Leeseite einen offenen Kanal 143 aus, der zur Ableitung der Flüssigkeit dient.

Die Strömungsrichtung des Gases erfolgt dabei von der Innenkante 144 des Verbindungselements 140 zu dessen Aussenkante 149. entlang der Länge 141 des Verbindungselements 140.

Das Verbindungselement 150 enthält abweichend zum Verbindungselement 140 keine Vorsprünge 142. Des weiteren weist das Verbindungselement 150 ein wellenartiges Profil auf, wobei die Amplitude der Wellenform von der Eintrittsfläche 28 zur Austrittsfläche 29 zunehmend ist. Das heisst die von den Flanken, die den Wellenberg 155, das Wellental 156 oder den Wellenberg 156 ausbilden, eingeschlossenen Winkel können voneinander abweichen. Des weiteren ist der Abstand zwischen Wellenberg 155 und Wellental 156 entlang der oberen Kante des Verbindungselements kleiner als der Abstand vom Wellental 156 zum Wellenberg 157. Die Eintrittsfläche 28 ist dabei für alle Ausführungsbeispiele als der Ort definiert, an welchem das tröpfchenbeladene Gas vom Strömungskanal 5 in das Abscheideelement 8 eintritt. Die Austrittsfläche 29 ist als der Ort definiert, an welchem das im wesentlichen tropfenfreie Gas das Abscheideelement verlässt. Eine Teilfläche der sich über den gesamten Umfang des Abscheideelements erstreckenden Austrittfläche 29 ist durch eine strichpunktierte Begrenzungslinie in Fig. 15 a begrenzt.

Das in Fig. 15b gezeigte Verbindungselement 140 weist ebenfalls ein wellenartiges Profil auf, wobei die Amplitude der Wellenform in Richtung der Ringströmung zunimmt. Das heisst die von den Flanken, die den Wellenberg 145, das Wellental 146, den Wellenberg 147 oder das Wellental 148 ausbilden, eingeschlossenen Winkel können voneinander abweichen.. Des weiteren ist der Abstand zwischen Wellenberg 145 und Wellental 146 entlang der oberen Kante des Verbindungselements kleiner als der Abstand des Wellentals 146 zum Wellenberg 147. Der Abstand zwischen Wellenberg 147 und dem Wellental 148 ist wiederum grösser als der Abstand des Wellentals 146 zum Wellenberg 147.

Die Hauptströmungsrichtung der Ringströmung ist in sämtlichen Ausführungsbeispielen durch den Pfeil 42 gekennzeichnet.

Selbstverständlich können die Verbindungselemente der einzelnen Ausführungsbeispiele auf beliebige Weise miteinander kombiniert werden. Eine mögliche Kombination ist in Fig. 1a dargestellt. Die Kombination ist primär von der Gasgeschwindigkeit sowie der Anzahl der Tropfen und der Tropfengrössenverteilung abhängig.

**Patentansprüche**

**1.**  Tropfenabscheider (10) umfassend einen Strömungskanal (5), durch welchen ein tröpfchenbeladenes Gas hindurch leitbar ist und entlang einer Hauptströmungsrichtung (6) von diesem tröpfchenbeladenen Gas durchströmbar ist, wobei ein Abscheideelement (8) im wesentlichen ringförmig um den Strömungskanal (5) angeordnet ist, welches von einer vom Strömungskanal (5) weggerichteten Ringströmung durchströmbar ist, wobei das Abscheideelement (8) ein Bodenelement (11) und ein Deckenelement (12) sowie ein Verbindungselement (1, 30, 40, 100, 110, 120, 130, 140, 150) umfasst, welches zwischen dem Bodenelement (11) und dem Deckenelement (12) derart angeordnet ist, dass das Bodenelement (11) und das Deckenelement (12) in einem Abstand zueinander angeordnet sind, welcher durch das Verbindungselement (1, 30, 40, 100, 110, 120, 130, 140, 150) festgelegt ist, **dadurch gekennzeichnet, dass** das Verbindungselement (1, 30, 40, 100, 110, 120, 130, 140, 150) eine Abscheideoberfläche (33, 43) umfasst, entlang derer Tröpfchen des tröpfchenbeladenen Gases in Richtung des Bodenelements (11) als Film leitbar sind, welche eine mittlere Länge von mehr als 1 mm aufweist.

2. Tropfenabscheider nach Anspruch 1, wobei die Verbindungselemente einen Lückengrad im Bereich von 20 bis 80 % aufweisen.

3. Tropfenabscheider nach einem der vorhergehenden Ansprüche, wobei die mittlere Länge des Verbindungselements sich im wesentlichen von einer Mantelfläche, die den äusseren Radius des Strömungskanals (5) aufweist, zu einer Mantelfläche, die den äusseren Radius des Boden-oder Deckenelements (11, 12) aufweist, erstreckt.

4. Tropfenabscheider nach einem der vorhergehenden Ansprüche, wobei sich ein ringförmiges Vorabscheideelement (17) vom äusseren Radius des Strömungskanals bis zu einem Aussenradius des ringförmigen Vorabscheideelements erstreckt, wobei der Aussenradius des ringförmigen Vorabscheideelements (17) kleiner als der äussere Radius des Boden- oder Deckenelements (11, 12) ist.

5. Tropfenabscheider nach einem der vorhergehenden Ansprüche, wobei das Verbindungselement (1, 30, 40, 100, 110, 120, 130, 140, 150) eine Abscheideoberfläche (33, 43) aufweist, die im wesentlichen von der mittleren Länge und einer Höhe des Verbindungselements gebildet ist. und/oder wobei ein erstes Verbindungselement und ein zweites Verbindungselement zwischen dem Bodenelement und dem Deckenelement derart angeordnet sind, dass der Strömungsquerschnitt zwischen den ersten und zweiten zueinander benachbarten Verbindungselementen über deren Länge derart ausgebildet ist, dass die Strömungsgeschwindigkeit des tröpfchenbeladenen Gases auf dem Weg durch den vom ersten und zweiten Verbindungselement sowie vom Bodenelement und Deckenelement begrenzten Radialkanal im wesentlichen konstant ist.

6. Tropfenabscheider nach Anspruch 5, wobei die Höhe maximal dem Normalabstand zwischen Bodenelement (11) und Deckenelement (12) entspricht

7. Tropfenabscheider nach Ansprüchen 5 oder 6, wobei die Abscheideoberfläche zumindest einen ebenen Abschnitt oder leicht gekrümmten Abschnitt aufweist.

8. Tropfenabscheider nach einem der Ansprüche 5, 6 oder 7, wobei die Abscheidoberfläche ein wellenartiges Profil aufweist.

9. Tropfenabscheider nach Anspruch 8, wobei das wellenartige Profil zumindest einen Wellenberg (125, 135, 145) und ein Wellental (126, 136, 146) aufweist, wobei zumindest einer der Wellenberge als Spitze ausgebildet ist.

10. Tropfenabscheider nach einem der Ansprüche 5 bis 9, wobei die Abscheideoberfläche (33, 43) zumindest einen Kanal (38, 39, 133, 143) und/oder eine Öffnung (41, 127) zur Ableitung von Flüssigkeit enthält, sodass die Flüssigkeit in Richtung des Bodenelements leitbar ist, welches eine Abflussöffnung oder einen Abflusskanal enthalten kann.

11. Tropfenabscheider nach Anspruch 10, wobei der Kanal (133, 143) von einem Umleitungselement gebildet wird, welches sich als Vorsprung (132, 142) von der Abscheideoberfläche (33, 43) erstreckt, sodass Flüssigkeit zwischen dem Vorsprung (132, 142) und der Abscheideoberfläche (33, 43) ableitbar ist.

12. Tropfenabscheider nach Anspruch 10, wobei die Abscheideoberfläche (33, 43) von einem ersten dünnwandigen Plattenelement (122) und einem zweiten dünnwandigen Plattenelement (123) gebildet ist, der Kanal von einer Öffnung (127) in der Abscheideoberfläche (33, 43) gebildet ist, sodass Flüssigkeit zwischen dem ersten dünnwandigen Plattenelement (122) und dem zweiten dünnwandigen Plattenelement (123) ableitbar ist.

13. Tropfenabscheider nach Anspruch 12, wobei das erste dünnwandige Plattenelement (122) mit dem zweiten dünnwandigen Plattenelement (123) über mindestens ein Abstandselement (124) verbunden ist.

14. Tropfenabscheider nach einem der vorhergehenden Ansprüche, enthaltend eine Mehrzahl von übereinander angeordneten Abscheideelementen (8).

15. Verwendung eines Tropfenabscheiders nach einem der vorhergehenden Ansprüche zur Abscheidung von Kondensat aus Erdgas.

# Fig.1a

EP 2 436 432 A1

Fig.1b

EP 2 436 432 A1

19

# Fig.2a

# Fig.2b

# Fig.2c

# Fig.2d

Fig.3

## Fig.4

## Fig.5a

# Fig.5b

# Fig.6

Fig.7a

# Fig.7b

Fig.8

Fig.9g,Fig.9h

Fig.9d

Fig.9a,Fig.9b

Fig.9f

Fig.9i,Fig.9j

Fig.9c,Fig.9d

11

Fig.9h

Fig.9j

Fig.9e,Fig.9f

42

# Fig.9b

# Fig.9a

# Fig.9c

# Fig.9d

Fig.9f

Fig.9e

38
33
39
30

42

40

30

40

33

41

42

Fig.9g

30

33
33

42

40

Fig.9h

40

41
33

30

33

42

# Fig.9i

# Fig.9j

40

42

30

40

41

42

30

## Fig.10

## Fig.11

## Fig.12

## Fig.13a

## Fig.13b

Fig.13c

Fig.13d

## Fig.14a

12

8,10

130

11

42

## Fig.14b

132

133

136

43

133

135

33

42

130

132

131

## Fig.15a

## Fig.15b

**Europäisches Patentamt**
**European Patent Office**
**Office européen des brevets**

## EUROPÄISCHER RECHERCHENBERICHT

**Nummer der Anmeldung**

EP 10 18 3937

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | GB 1 557 307 A (MALONEY CRAWFORD TANK)<br>5. Dezember 1979 (1979-12-05)<br>* Seite 3, Zeilen 12-43; Abbildungen 1,3 *<br>----- | 1,2,5-7,<br>10,15<br>14 | INV.<br>B01D45/08 |
| Y,D | EP 1 930 059 A1 (SULZER CHEMTECH AG [CH])<br>11. Juni 2008 (2008-06-11)<br>* Abbildungen 1,4 *<br>----- | 14 | |
| X | EP 2 025 385 A1 (SIEMENS AG [DE])<br>18. Februar 2009 (2009-02-18)<br><br>* Absätze [0013] - [0015]; Abbildung 2 *<br>----- | 1-3,<br>5-10,12,<br>13,15 | |
| X<br>Y | US 5 112 375 A (BROWN MICHAEL R [US])<br>12. Mai 1992 (1992-05-12)<br>* Spalte 2, Zeile 51 - Spalte 3, Zeile 32;<br>Abbildungen 1,2,4 *<br>----- | 1-3,5-8<br>4,10,11 | |
| Y | GB 1 157 466 A (KLOECKNER HUMBOLDT DEUTZ<br>AG [DE]) 9. Juli 1969 (1969-07-09)<br>* Abbildung 19 *<br>----- | 4 | RECHERCHIERTE SACHGEBIETE (IPC) |
| Y | US 4 877 431 A (AVONDOGLIO LEO [US])<br>31. Oktober 1989 (1989-10-31)<br>* Abbildung 8 *<br>----- | 10,11 | B01D |

Der vorliegende Recherchenbericht wurde für alle Patentansprüche erstellt

| Recherchenort | Abschlußdatum der Recherche | Prüfer |
|---|---|---|
| München | 9. März 2011 | Sembritzki, Thorsten |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**EP 2 436 432 A1**

**ANHANG ZUM EUROPÄISCHEN RECHERCHENBERICHT
ÜBER DIE EUROPÄISCHE PATENTANMELDUNG NR.**

EP 10 18 3937

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-03-2011

| Im Recherchenbericht angeführtes Patentdokument | Datum der Veröffentlichung | Mitglied(er) der Patentfamilie | Datum der Veröffentlichung |
|---|---|---|---|
| GB 1557307 A | 05-12-1979 | KEINE | |
| EP 1930059 A1 | 11-06-2008 | KEINE | |
| EP 2025385 A1 | 18-02-2009 | CN 101765451 A<br>EP 2170485 A1<br>WO 2009015949 A1<br>US 2010206170 A1 | 30-06-2010<br>07-04-2010<br>05-02-2009<br>19-08-2010 |
| US 5112375 A | 12-05-1992 | KEINE | |
| GB 1157466 A | 09-07-1969 | AT 273166 B<br>BE 685419 A<br>CH 475782 A<br>DE 1542266 A1<br>DE 1542267 A1<br>DE 1542248 B1<br>JP 49036186 B<br>NL 6611163 A<br>SE 328847 B | 11-08-1969<br>16-01-1967<br>31-07-1969<br>20-04-1972<br>08-10-1970<br>18-06-1970<br>28-09-1974<br>14-02-1967<br>28-09-1970 |
| US 4877431 A | 31-10-1989 | KEINE | |

EPO FORM P0461

Für nähere Einzelheiten zu diesem Anhang : siehe Amtsblatt des Europäischen Patentamts, Nr.12/82

38

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1930059 A1